# EUROPEAN PATENT APPLICATION

(11) **EP 4 391 630 A1**
(43) Date of publication of application: **26.06.2024**
(21) Application number: 22879959.9
(22) Date of filing: 09.08.2022
(51) Int. Cl.: H04W 24/02

(54) **CLOCK SYNCHRONIZATION METHOD, DEVICE, AND SYSTEM**

(30) Priority: 12.10.2021 CN 202111186008
(71) Applicant: Huawei Technologies Co., Ltd., Shenzhen, Guangdong 518129 (CN)
(72) Inventor: MENG, Meng, Shenzhen, Guangdong 518129 (CN); ZHANG, Li, Shenzhen, Guangdong 518129 (CN); YANG, Jianhua, Shenzhen, Guangdong 518129 (CN)
(74) Representative: Gill Jennings & Every LLP
(86) International application number: PCT/CN2022/111209
(87) International publication number: WO 2023/061012

(57) **Abstract**

This application relates to the field of communication technologies, and specifically, to a clock synchronization method, a device, and a system. The method includes: A first device receives first information sent by a second device, where the first information includes second clock domain identification information. The first device updates clock domain identification information of the first device to the second clock domain identification information and sends a first synchronization request to the second device when quality of a signal between the first device and a second master device meets a first condition. The first device receives a first synchronization indication from the second device, where the first synchronization indication includes the second clock domain identification information and a first moment at which the second device sends the first synchronization indication. The first device synchronizes a clock of the first device to a second clock based on the second clock domain identification information and the first moment. According to the method, devices in different clock domains may be merged into a same clock domain, to accept unified scheduling and improve communication experience of a user.

## Description

This application claims priority to Chinese Patent Application No. 202111186008.8, filed with the China National Intellectual Property Administration on October 12, 2021 and entitled "CLOCK SYNCHRONIZATION METHOD, DEVICE, AND SYSTEM", which is incorporated herein by reference in its entirety.

### TECHNICAL FIELD

This application relates to the field of communication technologies, and specifically, to a clock synchronization method, a device, and a system.

### BACKGROUND

With development of intelligent terminals, there are usually a plurality of electronic devices in a same place (for example, a same home or a same office area). One-to-many, many-to-one, and many-to-many connections may be established between the plurality of electronic devices, to form a multi-device ad hoc networking system in the place, so as to facilitate collaborative work between the plurality of electronic devices.

Because different devices in the multi-device ad hoc networking system have different start time points or different time points of entering the place, the multi-device ad hoc networking system may have a plurality of clock domains. Devices in different clock domains comply with different clocks, and are scheduled by different master devices. As a result, channel interference may occur between the devices in the different clock domains, and communication experience of a user is affected.

### SUMMARY

Embodiments of this application provide a clock synchronization method, a device, and a system, so that devices in different clock domains may be merged into a same clock domain, to accept unified scheduling and improve communication experience of a user.

According to a first aspect, an embodiment of this application provides a clock synchronization method, where the method is applied to a wireless mesh network system, the wireless mesh network system includes a first device, a second device, a first master device, and a second master device, a clock of the first device and a clock of the first master device are synchronized, and a clock of the second device and a second clock of the second master device are synchronized. The method includes: The first device receives first information sent by the second device, where the first information includes second clock domain identification information, and the second clock domain identification information corresponds to the second clock. The first device updates clock domain identification information of the first device to the second clock domain identification information and sends a first synchronization request to the second device when quality of a signal between the first device and the second master device meets a first condition. The first device receives a first synchronization indication from the second device, where the first synchronization indication is sent by the second device in response to the first synchronization request, and the first synchronization indication includes the second clock domain identification information and a first moment at which the second device sends the first synchronization indication. The first device synchronizes the clock of the first device to the second clock based on the second clock domain identification information and the first moment. The second master device and the second device may be a same device, or may be two devices independent of each other.

In other words, in this embodiment of this application, when the first device is aware of a clock of the second master device, and the quality of the signal between the first device and the second master device meets a related condition, the first device may synchronize the clock to the clock of the second master device. Therefore, the first device may accept scheduling of the second master device, to improve communication experience of a user.

In a possible implementation, the first condition includes: the quality of the signal between the first device and the second master device is greater than quality of a signal between the first device and the first master device, and/or the quality of the signal between the first device and the second master device is greater than a preset quality threshold.

In other words, in this implementation, when the quality of the signal between the first device and the second master device is good, the first device may synchronize the clock to the clock of the second master device, to accept scheduling of the second master device.

In a possible implementation, that the first device updates clock domain identification information of the first device to the second clock domain identification information and sends a first synchronization request to the second device when quality of a signal between the first device and the second master device meets a first condition includes: The first device updates the clock domain identification information of the first device to the second clock domain identification information and sends the first synchronization request to the second device when the quality of the signal between the first device and the second master device meets the first condition and a ranking priority of the second master device is higher than a ranking priority of the first master device.

In other words, in this implementation, when the quality of the signal between the first device and the second master device is good, and the ranking priority of the second master device is higher than that of the first master device, the first device may synchronize the clock to the clock of the second master device, to accept scheduling of the second master device.

In a possible implementation, the wireless mesh network system further includes a third device, the third device and the first device are located in a first island, and the third device is an island owner of the first island. The method further includes: The first device sends a first domain merge request to the third device, where the first domain merge request includes information about the second master device, and the information about the second master device includes identification information of the second master device or the second clock domain identification information. The third device updates clock domain identification information of the third device to the second clock domain identification information based on the information about the second master device. The first device sends a second synchronization indication to the third device, where the second synchronization indication includes the second clock domain identification information and a second moment at which the first device sends the second synchronization indication. The third device synchronizes a clock of the third device to the second clock based on the second clock domain identifier and the second moment.

In other words, in this implementation, after synchronizing the clock to the second clock, the first device may assist the island owner of the island in which the first device is located in synchronizing the clock to the second clock, so that the island owner can accept scheduling of the second master device, to improve communication experience of the user.

In a possible implementation, the first island further includes at least one fourth device, and the method further includes: The third device sends a third synchronization indication to the at least one fourth device, where the third synchronization indication includes a third moment at which the third device sends the third synchronization indication. The at least one fourth device synchronizes a clock of the at least one fourth device to the second clock based on the third moment.

In other words, in this implementation, the island owner of the first island may indicate a device in the island to synchronize a clock to the second clock, so that the device in the island can accept scheduling of the second master device, to improve communication experience of the user.

In a possible implementation, the method further includes: The third device sends a second domain merge request to the first master device, where the second domain merge request includes the information about the second master device, and the information about the second master device includes the identification information of the second master device or the second clock domain identification information. The first master device updates clock domain identification information of the first master device to the second clock domain identification information based on the information about the second master device. The third device sends a fourth synchronization indication to the first master device, where the fourth synchronization indication includes the second clock domain identification information and a fourth moment at which the third device sends the fourth synchronization indication. The first master device synchronizes the clock of the first master device to the second clock based on the second clock domain identification information and the fourth moment.

In other words, in this implementation, the third device may assist the first master device in synchronizing the clock to the clock of the second master device, so that the first master device can accept scheduling of the second master device, to improve communication experience of the user.

In a possible implementation, the wireless mesh network system further includes at least one fifth device, a clock of the at least one fifth device and the first clock are synchronized, and the at least one fifth device does not belong to the first island. The method further includes: The first master device sends a fifth synchronization indication to the at least one fifth device, where the fifth synchronization indication includes a fifth moment at which the first master device sends the fifth synchronization indication. The at least one fifth device synchronizes the clock of the at least one fifth device to the second clock based on the fifth moment.

In other words, in this implementation, the first master device may indicate a slave device that has not performed clock synchronization to synchronize a clock to the second clock, so that the slave device can accept scheduling of the second master device, to improve communication experience of the user.

In a possible implementation, the at least one fifth device includes a sixth device and a seventh device, there is a Wi-Fi link between the sixth device and the sixth device, the sixth device is outside signal coverage of the second master device, and the seventh device is within the signal coverage of the second master device. That the at least one fifth device synchronizes the clock of the at least one fifth device to the second clock based on the fifth moment includes: The seventh device synchronizes a clock of the seventh device to the second clock based on the fifth moment. The sixth device sends a sixth synchronization request to the seventh device. The sixth device receives a sixth synchronization indication sent by the seventh device, where the sixth synchronization indication includes a sixth moment at which the sixth device sends the sixth synchronization indication. The sixth device synchronizes a clock of the sixth device to the second clock based on the sixth moment.

In other words, in this implementation, the sixth device outside the signal coverage of the second master device may synchronize the clock to the second clock via the seventh device having the Wi-Fi link with the sixth device, so that the sixth device accepts scheduling of the second master device, to improve communication experience of the user.

In a possible implementation, the wireless mesh network system further includes at least one eighth device, the at least one eighth device and the first device are located in a second island, and the first device is an island owner of the second island. The method further includes: The first device sends a seventh synchronization indication to the at least one eighth device, where the seventh synchronization indication includes a seventh moment at which the first device sends the seventh synchronization indication. The at least one eighth device synchronizes a clock of the at least one eighth device to the second clock based on the seventh moment.

In other words, in this implementation, after the island owner synchronizes the clock to the second clock, the island owner may indicate another device in the island to synchronize a clock to the second clock, so that the another device in the island accepts scheduling of the second device, to improve communication experience of the user.

In a possible implementation, the method further includes: The first device sends a third domain merge request to the first master device, where the third domain merge request includes information about the second master device, and the information about the second master device includes identification information of the second master device or the second clock domain identification information. The first master device updates clock domain identification information of the first master device to the second clock domain identification information based on the information about the second master device. The first device sends an eighth synchronization indication to the first master device, where the eighth synchronization indication includes the second clock domain identification information and an eighth moment at which the first device sends the eighth synchronization indication. The first master device synchronizes the clock of the first master device to the second clock based on the second clock domain identification information and the eighth moment.

In other words, in this implementation, the first device may assist the first master device in synchronizing the clock to the clock of the second master device, so that the first master device can accept scheduling of the second master device, to improve communication experience of the user.

In a possible implementation, the wireless mesh network system further includes at least one ninth device, and the at least one ninth device does not belong to the second island. The method further includes: The first master device sends a ninth synchronization indication to the at least one ninth device, where the ninth synchronization indication includes a ninth moment at which the first master device sends the ninth synchronization indication. The at least one ninth device synchronizes a clock of the at least one ninth device to the second clock based on the ninth moment.

In other words, in this implementation, the first master device may indicate a slave device that has not performed clock synchronization to synchronize a clock to the second clock, so that the slave device can accept scheduling of the second master device, to improve communication experience of the user.

In a possible implementation, the first device and the first master device are a same device, and the wireless mesh network system further includes at least one tenth device. The method further includes: The first device sends a tenth synchronization indication to the at least one tenth device, where the tenth synchronization indication includes a tenth moment at which the first device sends the tenth synchronization indication. The at least one tenth device synchronizes a clock of the at least one tenth device to the second clock based on the tenth moment.

In other words, in this implementation, the first device may indicate another device that has not performed clock synchronization to synchronize a clock to the second clock, so that the another device can accept scheduling of the second master device, to improve communication experience of the user.

In a possible implementation, the first information is a data frame or a management frame, and the second clock domain identification information is located in a frame header of the data frame or the management frame; and/or the second clock domain identification information is determined based on preset identification information and the identification information of the second master device.

In other words, the first device is aware of the second clock by receiving the data frame or the management frame sent by the second device. In addition, the second clock domain identification information is determined based on the preset identification information and the identification information of the second master device, and may be used to distinguish a clock of a wireless mesh network communication technology from a clock of a conventional Wi-Fi technology, so that the first device starts a procedure of synchronizing the clock to the second clock.

According to a second aspect, an embodiment of this application provides a clock synchronization method, which may be applied to a first device in a wireless mesh network system. The wireless mesh network system further includes a second device, a first master device, and a second master device, a clock of the first device and a clock of the first master device are synchronized, and a clock of the second device and a second clock of the second master device are synchronized. The method includes: The first device receives first information sent by the second device, where the first information includes second clock domain identification information, and the second clock domain identification information corresponds to the second clock. The first device updates clock domain identification information of the first device to the second clock domain identification information and sends a first synchronization request to the second device when quality of a signal between the first device and the second master device meets a first condition. The first device receives a first synchronization indication from the second device, where the first synchronization indication is sent by the second device in response to the first synchronization request, and the first synchronization indication includes the second clock domain identification information and a first moment at which the second device sends the first synchronization indication. The first device synchronizes the clock of the first device to the second clock based on the second clock domain identification information and the first moment. The second master device and the second device may be a same device, or may be two devices independent of each other.

In a possible implementation, the first condition includes: the quality of the signal between the first device and the second master device is greater than quality of a signal between the first device and the first master device, and/or the quality of the signal between the first device and the second master device is greater than a preset quality threshold.

In a possible implementation, that the first device updates clock domain identification information of the first device to the second clock domain identification information and sends a first synchronization request to the second device when quality of a signal between the first device and the second master device meets a first condition includes: The first device updates the clock domain identification information of the first device to the second clock domain identification information and sends the first synchronization request to the second device when the quality of the signal between the first device and the second master device meets the first condition and a ranking priority of the second master device is higher than a ranking priority of the first master device.

In a possible implementation, the wireless mesh network system further includes a third device, the third device and the first device are located in a first island, and the third device is an island owner of the first island. The method further includes: The first device sends a first domain merge request to the third device, where the first domain merge request includes information about the second master device, the information about the second master device includes identification information of the second master device or the second clock domain identification information, and the information about the second master device is used by the third device to update clock domain identification information of the third device to the second clock domain identification information. The first device sends a second synchronization indication to the third device, where the second synchronization indication includes the second clock domain identification information and a second moment at which the first device sends the second synchronization indication, and the second clock domain identification information and the second moment are used by the third device to synchronize a clock of the third device to the second clock.

In a possible implementation, the wireless mesh network system further includes at least one eighth device, the at least one eighth device and the first device are located in a second island, and the first device is an island owner of the second island. The method further includes: The first device sends a seventh synchronization indication to the at least one eighth device, where the seventh synchronization indication includes a seventh moment at which the first device sends the seventh synchronization indication, and the seventh moment is used by the at least one eighth device to synchronize a clock of the at least one eighth device to the second clock.

In a possible implementation, the method further includes: The first device sends a third domain merge request to the first master device, where the third domain merge request includes information about the second master device, the information about the second master device includes identification information of the second master device or the second clock domain identification information, and the information about the second master device is used by the first master device to update clock domain identification information of the first master device to the second clock domain identification information. The first device sends an eighth synchronization indication to the first master device, where the eighth synchronization indication includes the second clock domain identification information and an eighth moment at which the first device sends the eighth synchronization indication, and the second clock domain identification information and the eighth moment are used by the first master device to synchronize the clock of the first master device to the second clock.

In a possible implementation, the first device and the first master device are a same device, and the wireless mesh network system further includes at least one tenth device. The method further includes: The first device sends a tenth synchronization indication to the at least one tenth device, where the tenth synchronization indication includes a tenth moment at which the first device sends the tenth synchronization indication, and the tenth moment is used by the at least one tenth device to synchronize a clock of the at least one tenth device to the second clock.

According to a third aspect, an embodiment of this application provides a clock synchronization method, applied to a wireless mesh network system, where the wireless mesh network system includes a first device, a second device, and a master device, a clock of the second device and a clock of the master device are synchronized, and there is a Wi-Fi link between the second device and the first device. The method includes: The first device sends a synchronization request to the second device when the first device is outside signal coverage of the master device. The second device sends a synchronization indication to the first device, where the synchronization indication includes a moment at which the second device sends the synchronization indication. The first device synchronizes a clock of the first device to the clock of the master device based on the moment at which the second device sends the synchronization indication.

In other words, when the first device is outside the signal coverage of the master device, the first device may synchronize the clock to the clock of the master device via the second device having the Wi-Fi link with the first device, so that the first device can accept scheduling of the master device, to improve communication experience of a user.

In a possible implementation, that the second device sends a synchronization indication to the first device includes: The second device sends the synchronization indication to the first device based on a preset period.

In other words, in this implementation, the second device continuously sends the synchronization indication to the first device based on the preset period, so that the first device can maintain clock synchronization with the master device.

According to a fourth aspect, an embodiment of this application provides a wireless mesh network system, including a first device, a second device, a first master device, and a second master device, where a clock of the first device and a clock of the first master device are synchronized, and a clock of the second device and a second clock of the second master device are synchronized. The first device is configured to receive first information sent by the second device, where the first information includes second clock domain identification information, and the second clock domain identification information corresponds to the second clock. The first device is further configured to update clock domain identification information of the first device to the second clock domain identification information and send a first synchronization request to the second device when quality of a signal between the first device and the second master device meets a first condition. The first device is further configured to receive a first synchronization indication from the second device, where the first synchronization indication is sent by the second device in response to the first synchronization request, and the first synchronization indication includes the second clock domain identification information and a first moment at which the second device sends the first synchronization indication. The first device is further configured to synchronize the clock of the first device to the second clock based on the second clock domain identification information and the first moment. The second master device and the second device may be a same device, or may be two devices independent of each other.

In a possible implementation, the first condition includes: the quality of the signal between the first device and the second master device is greater than quality of a signal between the first device and the first master device, and/or the quality of the signal between the first device and the second master device is greater than a preset quality threshold.

In a possible implementation, the first device is configured to update the clock domain identification information of the first device to the second clock domain identification information and send the first synchronization request to the second device when the quality of the signal between the first device and the second master device meets the first condition and a ranking priority of the second master device is higher than a ranking priority of the first master device.

In a possible implementation, the wireless mesh network system further includes a third device, the third device and the first device are located in a first island, and the third device is an island owner of the first island. The first device is further configured to send a first domain merge request to the third device, where the first domain merge request includes information about the second master device, and the information about the second master device includes identification information of the second master device or the second clock domain identification information. The third device is configured to update clock domain identification information of the third device to the second clock domain identification information based on the information about the second master device. The first device is further configured to send a second synchronization indication to the third device, where the second synchronization indication includes the second clock domain identification information and a second moment at which the first device sends the second synchronization indication. The third device is further configured to synchronize a clock of the third device to the second clock based on the second clock domain identifier and the second moment.

In a possible implementation, the first island further includes at least one fourth device. The third device is further configured to send a third synchronization indication to the at least one fourth device, where the third synchronization indication includes a third moment at which the third device sends the third synchronization indication. The at least one fourth device is configured to synchronize a clock of the at least one fourth device to the second clock based on the third moment.

In a possible implementation, the third device is further configured to send a second domain merge request to the first master device, where the second domain merge request includes the information about the second master device, and the information about the second master device includes the identification information of the second master device or the second clock domain identification information. The first master device is configured to update clock domain identification information of the first master device to the second clock domain identification information based on the information about the second master device. The third device is further configured to send a fourth synchronization indication to the first master device, where the fourth synchronization indication includes the second clock domain identification information and a fourth moment at which the third device sends the fourth synchronization indication. The first master device is configured to synchronize the clock of the first master device to the second clock based on the second clock domain identification information and the fourth moment.

In a possible implementation, the wireless mesh network system further includes at least one fifth device, a clock of the at least one fifth device and the first clock are synchronized, and the at least one fifth device does not belong to the first island. The first master device is further configured to send a fifth synchronization indication to the at least one fifth device, where the fifth synchronization indication includes a fifth moment at which the first master device sends the fifth synchronization indication. The at least one fifth device is configured to synchronize the clock of the at least one fifth device to the second clock based on the fifth moment.

In a possible implementation, the at least one fifth device includes a sixth device and a seventh device, there is a Wi-Fi link between the sixth device and the sixth device, the sixth device is outside signal coverage of the second master device, and the seventh device is within the signal coverage of the second master device. The seventh device synchronizes a clock of the seventh device to the second clock based on the fifth moment. The sixth device is configured to send a sixth synchronization request to the seventh device. The sixth device is configured to receive a sixth synchronization indication sent by the seventh device, where the sixth synchronization indication includes a sixth moment at which the sixth device sends the sixth synchronization indication. The sixth device is configured to synchronize a clock of the sixth device to the second clock based on the sixth moment.

In a possible implementation, the wireless mesh network system further includes at least one eighth device, the at least one eighth device and the first device are located in a second island, and the first device is an island owner of the second island. The first device is further configured to send a seventh synchronization indication to the at least one eighth device, where the seventh synchronization indication includes a seventh moment at which the first device sends the seventh synchronization indication, and the at least one eighth device is configured to synchronize a clock of the at least one eighth device to the second clock based on the seventh moment.

In a possible implementation, the first device is further configured to send a third domain merge request to the first master device, where the third domain merge request includes information about the second master device, and the information about the second master device includes identification information of the second master device or the second clock domain identification information. The first master device is configured to update clock domain identification information of the first master device to the second clock domain identification information based on the information about the second master device. The first device is further configured to send an eighth synchronization indication to the first master device, where the eighth synchronization indication includes the second clock domain identification information and an eighth moment at which the first device sends the eighth synchronization indication. The first master device is further configured to synchronize the clock of the first master device to the second clock based on the second clock domain identification information and the eighth moment.

In a possible implementation, the wireless mesh network system further includes at least one ninth device, and the at least one ninth device does not belong to the second island. The first master device is further configured to send a ninth synchronization indication to the at least one ninth device, where the ninth synchronization indication includes a ninth moment at which the first master device sends the ninth synchronization indication. The at least one ninth device is configured to synchronize a clock of the at least one ninth device to the second clock based on the ninth moment.

In a possible implementation, the first device and the first master device are a same device, and the wireless mesh network system further includes at least one tenth device. The first device is further configured to send a tenth synchronization indication to the at least one tenth device, where the tenth synchronization indication includes a tenth moment at which the first device sends the tenth synchronization indication. The at least one tenth device is configured to synchronize a clock of the at least one tenth device to the second clock based on the tenth moment.

In a possible implementation, the first information is a data frame or a management frame, and the second clock domain identification information is located in a frame header of the data frame or the management frame; and/or the second clock domain identification information is determined based on preset identification information and the identification information of the second master device.

According to a fifth aspect, an embodiment of this application provides a communication device, where a wireless mesh network system in which the communication device is located further includes a second device, a first master device, and a second master device, a clock of the communication device and a clock of the first master device are synchronized, and a clock of the second device and a second clock of the second master device are synchronized. The communication device includes a processor and a memory. The processor is configured to execute instructions stored in the memory, so that the communication device receives first information sent by the second device, where the first information includes second clock domain identification information, and the second clock domain identification information corresponds to the second clock; updates clock domain identification information of the communication device to the second clock domain identification information and sends a first synchronization request to the second device when quality of a signal between the communication device and the second master device meets a first condition; receives a first synchronization indication from the second device, where the first synchronization indication is sent by the second device in response to the first synchronization request, and the first synchronization indication includes the second clock domain identification information and a first moment at which the second device sends the first synchronization indication; and synchronizes the clock of the communication device to the second clock based on the second clock domain identification information and the first moment. The second master device and the second device may be a same device, or may be two devices independent of each other.

In a possible implementation, the first condition includes: the quality of the signal between the communication device and the second master device is greater than quality of a signal between the communication device and the first master device, and/or the quality of the signal between the communication device and the second master device is greater than a preset quality threshold.

In a possible implementation, when the quality of the signal between the communication device and the second master device meets the first condition and a ranking priority of the second master device is higher than a ranking priority of the first master device, the processor is configured to execute the instructions stored in the memory, so that the communication device further updates the clock domain identification information of the communication device to the second clock domain identification information and sends the first synchronization request to the second device.

In a possible implementation, the wireless mesh network system further includes a third device, the third device and the communication device are located in a first island, and the third device is an island owner of the first island. The processor is configured to execute the instructions stored in the memory, so that the communication device is further configured to send a first domain merge request to the third device, where the first domain merge request includes information about the second master device, the information about the second master device includes identification information of the second master device or the second clock domain identification information, and the information about the second master device is used by the third device to update clock domain identification information of the third device to the second clock domain identification information; and configured to send a second synchronization indication to the third device, where the second synchronization indication includes the second clock domain identification information and a second moment at which the communication device sends the second synchronization indication, and the second clock domain identification information and the second moment are used by the third device to synchronize a clock of the third device to the second clock.

In a possible implementation, the wireless mesh network system further includes at least one eighth device, the at least one eighth device and the communication device are further located in a second island, and the communication device is an island owner of the second island. The processor is configured to execute the instructions stored in the memory, so that the communication device further sends a seventh synchronization indication to the at least one eighth device, where the seventh synchronization indication includes a seventh moment at which the communication device sends the seventh synchronization indication, and the seventh moment is used by the at least one eighth device to synchronize a clock of the at least one eighth device to the second clock.

In a possible implementation, the processor is configured to execute the instructions stored in the memory, so that the communication device further sends a third domain merge request to the first master device, where the third domain merge request includes information about the second master device, the information about the second master device includes identification information of the second master device or the second clock domain identification information, and the information about the second master device is used by the first master device to update clock domain identification information of the first master device to the second clock domain identification information; and sends an eighth synchronization indication to the first master device, where the eighth synchronization indication includes the second clock domain identification information and an eighth moment at which the communication device sends the eighth synchronization indication, and the second clock domain identification information and the eighth moment are used by the first master device to synchronize the clock of the first master device to the second clock.

In a possible implementation, the communication device and the first master device are a same device, and the wireless mesh network system further includes at least one tenth device. The processor is configured to execute the instructions stored in the memory, so that the communication device further sends a tenth synchronization indication to the at least one tenth device, where the tenth synchronization indication includes a tenth moment at which the communication device sends the tenth synchronization indication, and the tenth moment is used by the at least one tenth device to synchronize a clock of the at least one tenth device to the second clock.

According to a sixth aspect, an embodiment of this application provides a wireless mesh network system, where the wireless mesh network system includes a first device, a second device, and a master device, a clock of the second device and a clock of the master device are synchronized, and there is a Wi-Fi link between the second device and the first device. The first device is configured to send a synchronization request to the second device when the first device is outside signal coverage of the master device. The second device is configured to send a synchronization indication to the first device, where the synchronization indication includes a moment at which the second device sends the synchronization indication. The first device is further configured to synchronize a clock of the first device to the clock of the master device based on the moment at which the second device sends the synchronization indication.

In a possible implementation, the second device is configured to send the synchronization indication to the first device based on a preset period.

According to a seventh aspect, an embodiment of this application provides a computer-readable storage medium, including computer program instructions. When the computer program instructions are executed by a computing device, the computing device performs the method provided in any one of the first aspect, the second aspect, or the third aspect.

According to an eighth aspect, an embodiment of this application provides a computer program product including instructions. When the instructions are run by a computing device, the computing device is enabled to perform the method provided in any one of the first aspect, the second aspect, or the third aspect.

According to the clock synchronization method, the device, and the system provided in embodiments of this application, the devices in the different clock domains may be merged into the same clock domain, so that these devices can accept unified scheduling, to optimize channel resource scheduling, reduce mutual interference between devices, and improve communication experience of the user.

### BRIEF DESCRIPTION OF DRAWINGS

FIG. 1 is a schematic diagram of a scenario to which a clock synchronization method may be applied according to an embodiment of this application;
FIG. 2 is a schematic diagram of a structure of a device according to an embodiment of this application;
FIG. 3 is a schematic diagram of a structure of a clock domain according to an embodiment of this application;
FIG. 4A is a schematic diagram of a structure of a clock domain according to an embodiment of this application;
FIG. 4B is a schematic diagram of a structure of a clock domain according to an embodiment of this application;
FIG. 5A is a schematic diagram of a structure of a Wi-Fi MAC frame according to an embodiment of this application;
FIG. 5B is a schematic diagram of a structure of a beacon frame according to an embodiment of this application;
FIG. 6A and FIG. 6B are a flowchart of a clock synchronization method according to an embodiment of this application;
FIG. 7A is a schematic diagram of a structure of a clock domain according to an embodiment of this application;
FIG. 7B is a schematic diagram of a structure of a clock domain according to an embodiment of this application;
FIG. 8A and FIG. 8B are a flowchart of a clock synchronization method according to an embodiment of this application;
FIG. 9 is a flowchart of a clock synchronization method according to an embodiment of this application;
FIG. 10A is a schematic diagram of a structure of a sync request action frame according to an embodiment of this application;
FIG. 10B is a schematic diagram of a structure of a domain merge request frame and a domain merge response frame according to an embodiment of this application;
FIG. 10C is a schematic diagram of a structure of a PNF frame according to an embodiment of this application;
FIG. 11 is a flowchart of a clock synchronization method according to an embodiment of this application;
FIG. 12 is a flowchart of a clock synchronization method according to an embodiment of this application; and
FIG. 13 is a schematic block diagram of a communication device according to an embodiment of this application.

### DESCRIPTION OF EMBODIMENTS

The following describes technical solutions in embodiments of the present invention with reference to the accompanying drawings. It is clear that the described embodiments are merely some rather than all of embodiments of this specification.

In the descriptions of this specification, "an embodiment", "some embodiments", or the like indicates that one or more embodiments of this specification include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In the descriptions of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this specification, "a plurality of" means two or more than two.

In the descriptions of this specification, the terms "first" and "second" are merely intended for description, and shall not be understood as an indication or implication of relative importance or an implicit indication of a quantity of indicated technical features. Therefore, a feature limited by "first" or "second" may explicitly or implicitly include one or more features. The terms "include", "have", and their variants all mean "include but are not limited to", unless otherwise specifically emphasized in another manner.

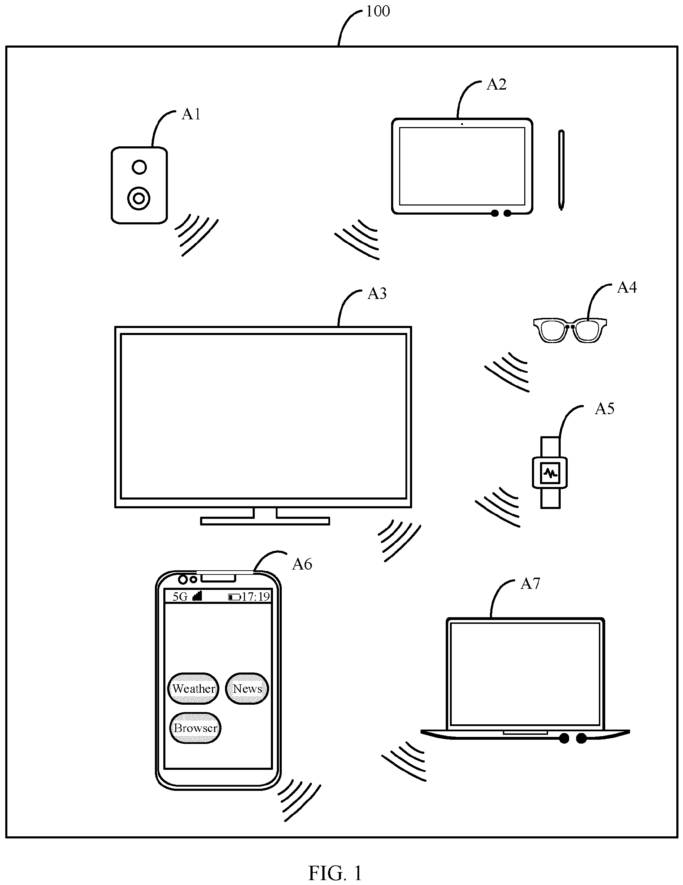

Refer to FIG. 1. With development and popularization of terminal devices, a plurality of devices such as a device A1, a device A2, a device A3, a device A4, a device A5, a device A6, and a device A7 may be located in a place 100 at the same time. The place 100 may be a place with limited space for a user activity, such as a home or a conference room.

In the following descriptions, when the device A1, the device A2, the device A3, the device A4, the device A5, the device A6, and the device A7 are not specially distinguished, they may be referred to as devices for short.

In some embodiments, the device may be a mobile phone, a tablet computer, a wearable device, a smart television, a Huawei smart screen, a smart speaker, a smart watch, or the like. An example embodiment of the device in embodiments of this application includes but is not limited to an electronic device on which iOS^{®}, Android^{®}, Windows^{®}, Harmony^{®} OS (Harmony OS), or another operating system is installed. Different devices in the plurality of devices in the place 100 may be devices of a same type, or may be devices of different types. A type of each device in the place 100 is not specifically limited in embodiments of this application.

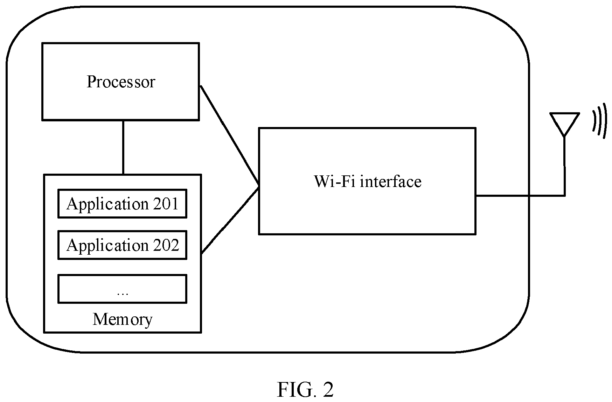

Refer to FIG. 2. In some embodiments, a device may include a processor, a memory, and a Wi-Fi interface. The device may broadcast a management frame such as a beacon (beacon) frame or a period notification frame (period notification frame, PNF) via the Wi-Fi interface. The device may also establish a Wi-Fi link with another device, to exchange a data frame with the another device over the Wi-Fi link. The data frame is a frame that carries service data and is used to implement a related service. A projection service is used as an example, and the service data may be video stream data. A transmission service of a document is used as an example, and the service data may be information about the document. Different from the data frame, the management frame is a type of frame that is not used to carry service data but is used to implement management or control between devices. For more specific descriptions of the data frame and the management frame, refer to existing descriptions. Details are not described herein.

Still refer to FIG. 2. The memory of the device may store a plurality of applications such as an application 201 and an application 202. The processor of the device may invoke one or more applications stored in the memory, to send service data to the another device via the Wi-Fi interface, or process service data received from the another device via the Wi-Fi interface.

The device in embodiments of this application may support a point-to-point interconnection and interworking wireless fidelity (wireless fidelity, Wi-Fi) wireless mesh (mesh) network communication technology. The Wi-Fi wireless mesh network communication technology may enable electronic devices in a same place to bypass a network infrastructure (for example, an access point (access point, AP) or a cellular network), to implement a one-to-one, one-to-many, or many-to-many Wi-Fi connection between devices in a same mesh network. For example, the place may be a place with limited space, such as a home or a conference room. In an example, the Wi-Fi wireless mesh network communication technology may be specifically a wireless fidelity neighborhood aware network (wireless fidelity neighborhood aware network, Wi-Fi NAN).

The device A1 is used as an example. In the wireless mesh network communication technology, when the device A1 is powered on or a wireless mesh network communication function is enabled, a PNF frame may be sent on a preset social channel (social channel), and a PNF frame or a beacon (beacon) frame sent by another device is listened to on the social channel, to perform mutual discovery between devices. If the device A1 listens to a beacon frame of a master (master) device in a preset time period after the device A1 is powered on or the wireless mesh network communication function is enabled, the device A1 may become a slave (slave) device of the master device, and accept scheduling of the master device. If the device A1 listens to, in a preset time period after the device A1 is powered on or the wireless mesh network communication function is enabled, no beacon frame sent by a master (master) device but listens to a PNF frame or a beacon frame sent by another device, the device A1 may start a master device election procedure, to elect the master device. Specifically, the device A1 may perform master device election based on a ranking priority (ranking priority, RP) value notified by using the PNF frame or the beacon frame. After the master device is elected, the device A1 may synchronize a clock of the device A1 to a clock of the master device, serve as a slave device of the master device, and accept scheduling of the master device.

The master device divides time into several slots (duration of each slot may be 16 ms) based on the clock of the master device, and the N slots form one scheduling period. N is a positive integer greater than 2. In the first M slots of each scheduling period, there is a need to switch to the preset social channel. In the M slots, the master device sends a beacon frame, and the slave device sends a PNF frame. M is a positive integer less than N and greater than 0. The M slots may be referred to as synchronization slots.

As described above, a clock of each slave device of a master device is synchronized to a clock of the master device. In other words, the clock of the master device and the clock of the slave device of the master device are synchronized. In embodiments of this application, one master device and a slave device of the master device may form a clock domain. Clocks of devices in a same clock domain are synchronized.

A Wi-Fi link may be established when two devices in the same clock domain need to collaboratively process a service (for example, projection and document transmission). The device A1 and the device A2 having a Wi-Fi NAN function are used as an example. The device A1 and the device A2 may sequentially exchange a NAN data path request (NAN data path request, NDP Request), a NAN data path response (NAN data path response, NDP Response), a NAN data path confirm (NAN data path confirm, NDP Confirm), a NAN data path key (NAN data path key install, NDP Key Install), and other information. In this way, a Wi-Fi link between the device A2 and the device A1 is established. A data frame carrying service data may be transmitted over the Wi-Fi link.

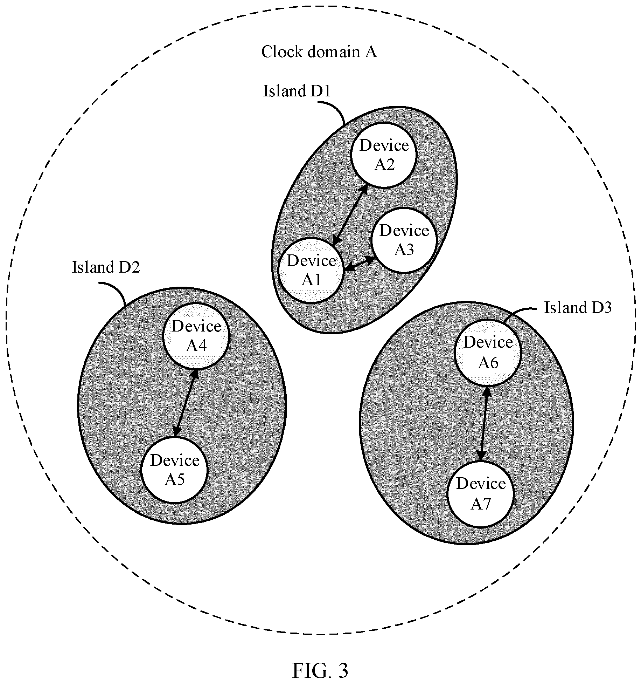

Refer to FIG. 3. Two or more devices having a Wi-Fi link may form an island. Different devices in a same island may transmit service data over a Wi-Fi link, to complete a related service (for example, projection and document transmission). For example, as shown in FIG. 1, the device A1, the device A2, and the device A3 in a clock domain A forms an island D1. The device A4 and the device A5 in the clock domain A forms an island D2. The device A6 and the device A7 in the clock domain A forms an island D3. The Wi-Fi link between the two devices may be a one-hop Wi-Fi link between the two devices. In other words, the two devices are directly connected over the Wi-Fi link. The Wi-Fi link between the two devices may alternatively be a multi-hop Wi-Fi link between the two devices. In other words, there is a Wi-Fi link between one of the two devices and another device, and there is a Wi-Fi link between the another device and the other device of the two devices. The another device is a device other than the two devices.

The master device may detect quality of a signal between each device and the master device in the island. In an example, the quality of the signal may be specifically a received signal strength indication (received signal strength indication, RSSI). In an example, the quality of the signal may be specifically a signal to interference plus noise ratio (signal to interference plus noise ratio, SINR). The master device may determine a device with optimal quality of the signal to the master device in an island as an island owner. In other words, in an island, quality of a signal between the island owner and the master device is better than quality of a signal between another device and the master device in the island. In the island D1, the device A1 may be set as an island owner. In the island D2, the device A4 may be set as an island owner. In the island D3, the device A6 may be set as an island owner.

In addition, it should be noted that, in embodiments of this application, it is not required that each device in the same clock domain be within signal coverage of the master device in the clock domain. Specifically, one or more devices in the island are within the signal coverage of the master device, and another device in the island may be outside the signal coverage of the master device. A device outside the signal coverage of the master device in the island may synchronize a clock to the clock of the master device via a device within the signal coverage of the master device in the island. For example, the device outside the signal coverage of the master device in the island may synchronize the clock to the clock of the master device via a device that has a Wi-Fi link with the device (as described above, there is a Wi-Fi link between different devices in the same island) and that is within the signal coverage of the master device. More specifically, the device outside the signal coverage of the master device in the island may synchronize the clock to the clock of the master device via an island owner (as described above, the island owner is determined by the master device based on the quality of the signal to the master device, and the island owner of the island in the clock domain is within the signal coverage of the master device).

The master device may perform channel resource scheduling on the device in the clock domain in which the master device is located, that is, the master device may perform channel resource scheduling on the slave device of the master device, so that different islands operate on different channels as far as possible, and signals of the different islands do not interfere with each other.

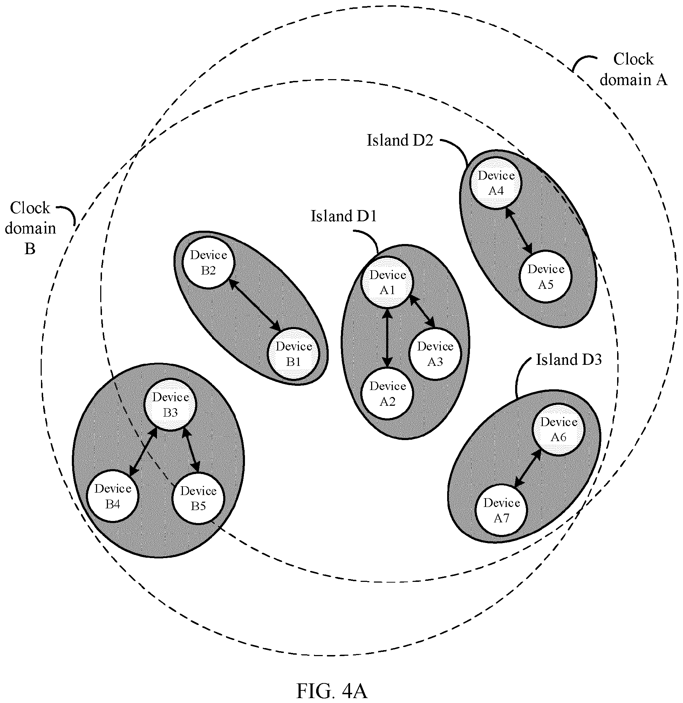

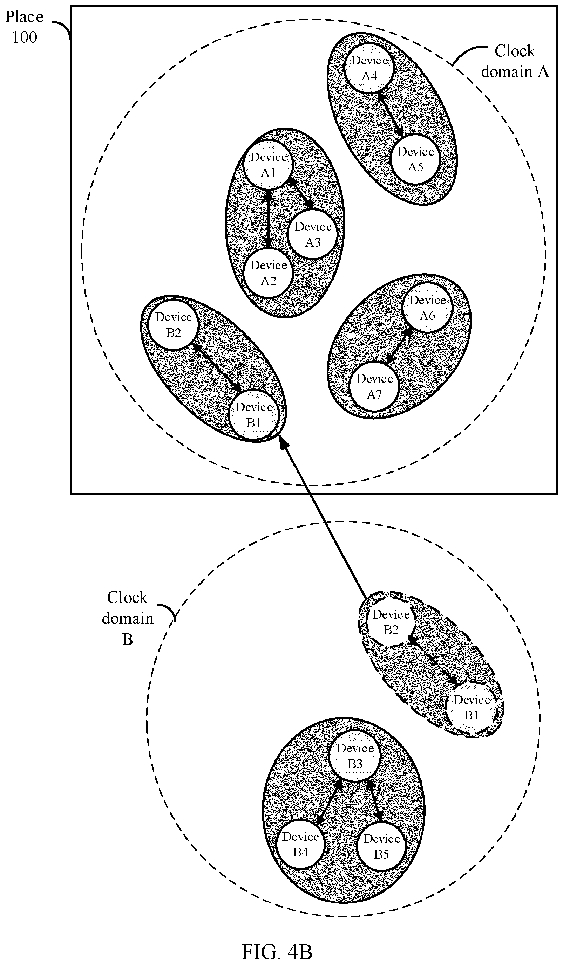

Two or more clock domains may exist in the same place because time points of starting up devices or enabling a wireless mesh network communication function are different, time points of entering the place by the devices, or other reasons. For example, as shown in FIG. 4A, there is a clock domain B in addition to a clock domain A in a place. The clock domain B may be formed by a device B1, a device B2, a device B3, a device B4, and a device B5. For example, as shown in FIG. 4B, in the place 100, there is the clock domain A formed by a device A1, a device A2, a device A3, a device A4, a device A5, a device A6, and a device A7. The device B 1 and the device B2 that are originally located in the clock domain B outside the place 100 may be moved to the place 100, and are close to the device in the clock domain A. Therefore, there are different clock domains in the place 100, and a distance between devices in the different clock domains is small. As a result, mutual interference may occur.

As described above, devices in different clock domains are scheduled by different master devices, and scheduling may be inconsistent. Consequently, operating channels of the devices in the different clock domains interfere with each other, and communication experience of a user is affected. For example, if two devices that are close to each other are located in different clock domains respectively, and operating channels of the two devices are the same or adjacent, the two devices may interfere with each other.

Embodiments of this application provide a clock synchronization method. Different clock domains in a same place (for example, the place 100) may be merged, so that devices that may cause interference in the same place are merged into a same clock domain (for example, the device B 1 and the device B2 shown in FIG. 4B are merged into the clock domain A; and for another example, the devices in the clock domain A shown in FIG. 4A are merged into the clock domain B), and are scheduled by a same master device. In this way, air interface resources are fully used, and mutual interference caused by inconsistent scheduling between adjacent devices is avoided. Clock domain merge may specifically mean that a clock of a part or all of devices in a clock domain is synchronized to a clock of a master device in another clock domain. For ease of description, a clock domain to which the part or all of the devices belong before clock synchronization may be referred to as a source clock domain, and a clock domain to which the part or all of the devices belong after synchronization is referred to as a target clock domain.

The following uses the clock domain A and the clock domain B in the place 100 as an example to describe the clock synchronization method provided in embodiments of this application. The clock domain A may be set as a source clock domain, and the clock domain B may be set as a target clock domain.

It may be understood that a device in the clock domain A needs to be aware of existence of the clock domain B, so that the device may be synchronized to the clock domain B. Therefore, the following first describes a clock domain awareness solution.

In some embodiments, as described above, in the first M slots (that is, synchronization slots) of N slots in each scheduling period, a device in the clock domain B sends a management frame on a social channel. The management frame carries clock domain identification information, and the information indicates a clock domain to which the device sending the management frame belongs. If the device is a master device, the sent management frame is specifically a beacon frame. If the device is a slave device, the sent management frame is specifically a PNF frame. As described above, the social channel is preset. Therefore, social channels of the clock domain A and the clock domain B are the same preset channel. A device in the clock domain A may listen to, on the social channel, the management frame sent by the device in the clock domain B. After listening to the management frame sent by the device (the device B1) in the clock domain B, the device (for example, the device A1) in the clock domain A may parse the clock domain identification information in the management frame, to determine that the device sending the management frame, that is, the device B1, belongs to the clock domain B, and then is aware of existence of the clock domain B. Similarly, the device in the clock domain A may also send a management frame on the social channel. The device in the clock domain B may also listen to, on the social channel, the management frame sent by the device in the clock domain B, and then can be aware of existence of the clock domain A.

Generally, for a scheduling period, a time limit of the scheduling period is mostly a service time limit, and a proportion of synchronization slots is small. Therefore, a case in which synchronization slots of different clock domains do not overlap may occur. In some embodiments, for the case in which the synchronization slots of the different clock domains do not overlap, a device in the clock domain B may send a data frame, where the data frame carries clock domain identification information, and the information indicates a clock domain to which the device sending the management frame belongs. When an operating channel of the device (for example, the device B1) in the clock domain B and an operating channel of the device (for example, the device A1) in the clock domain A are a same channel, the device A1 may listen to the data frame sent by the device B1, and parse the clock domain identification information carried in a frame header of the data frame, to determine that the device sending the data frame, that is, the device B1, belongs to the clock domain B, and then can be aware of existence of the clock domain B. In this embodiment, the clock domain identification information is carried in the data frame, so that the clock domain A and the clock domain B can also be aware of existence of each other when synchronization slots of the clock domain A and synchronization slots of the clock domain B do not overlap.

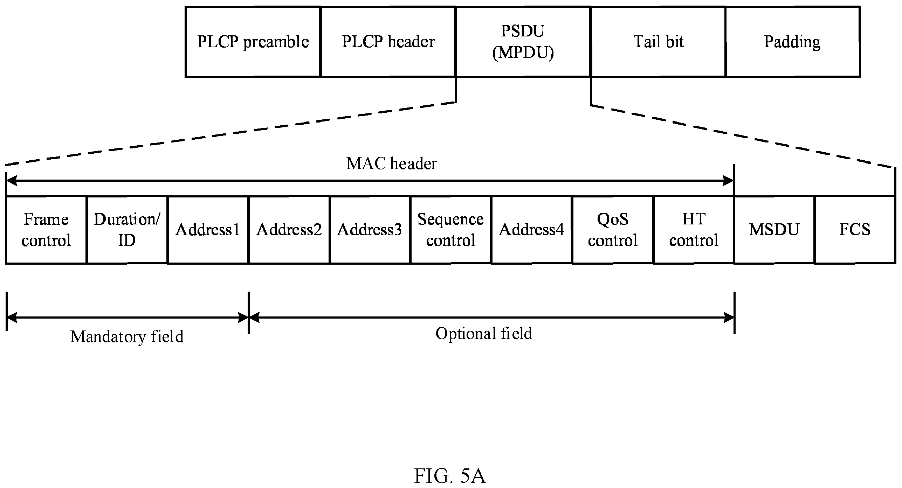

According to a related protocol of a wireless mesh network communication technology, for example, the institute of electrical and electronics engineers (institute of electrical and electronics engineers, IEEE) 802.11 series protocol, both a management frame and a data frame for Wi-Fi belong to a media access control (media access control, MAC) frame, and have a media access control (media access control, MAC) header (header) in a same format. FIG. 5A is a schematic diagram of a structure of a Wi-Fi MAC frame. As shown in FIG. 5A, a MAC header in the Wi-Fi MAC frame may include fields such as Address2 (Addr2) and Address3 (Addr3). One or more of these fields may be used to carry clock domain identification information. In other words, the clock domain identification information may be filled in an optional field of the MAC header. In an example, the clock domain identification information may be filled in Addr3.

It may be understood that the clock domain identification information indicates a clock domain to which a device sending the management frame belongs, and the clock domain is a clock domain of a wireless mesh network communication technology. The clock domain identification information needs to meet the following two conditions.
1. The clock domain identification information can distinguish between the wireless mesh network communication technology and a conventional Wi-Fi technology. The conventional Wi-Fi technology is a technology in which a terminal device serving as a station (station, STA) is connected to an access point (access point, AP), accesses a network via the access point, and communicates with another terminal device. For details, refer to descriptions in the conventional technology. Details are not described herein.
2. The clock domain identification information can distinguish between different clock domains of the wireless mesh network communication technology. For example, clock domain identification information of the clock domain B and clock domain identification information of the clock domain A are different, and separately indicate a corresponding clock domain.

Based on the foregoing two conditions, the clock domain identification information may be set. In some embodiments, partial information in master device identification information may be replaced with preset information, and the master device identification information after the foregoing replacement processing is used as clock domain identification information of the clock domain to which the master device belongs. As described above, a clock domain is formed by a master device and a slave device of the master device. Therefore, for the clock domain, the master device is unique, and master devices of different clock domains are different, so that the clock domain may be identified by master device identification information, to distinguish between the different clock domains. In addition, to distinguish between the wireless mesh network communication technology and the conventional Wi-Fi technology, the partial information in the master device identification information is replaced with the preset information, where the preset information is not included in device identification information in the conventional Wi-Fi technology, and therefore may be used to distinguish between the wireless mesh network communication technology and the conventional Wi-Fi technology.

In an example, the master device identification information may be a MAC address of the master device, and the partial information in the master device identification information may be the first three bytes of the master device identification information. An example in which the MAC address of the master device is 56:30:ac:48:a7:56, and information used to replace the first three bytes of the MAC address of the master device is 00:E0:FC. The clock domain identification information may be 00:E0:FC:48:a7:56. 00:E0:FC is used to distinguish between the wireless mesh network communication technology and the conventional Wi-Fi technology, and 48:a7:56 is used to distinguish between different clock domains.

Therefore, the configured clock domain identification information can distinguish between a clock domain of the wireless mesh network communication technology and a clock domain of the conventional Wi-Fi technology, and can also distinguish between different clock domains of the wireless mesh network communication technology.

In some embodiments, if two devices need to collaboratively process a service (for example, projection or document transmission), the two devices may establish a Wi-Fi link. Before the Wi-Fi link is established, the two devices need to be synchronized to a same clock domain. When the Wi-Fi link needs to be established between the two devices, the two devices may send clock domain identification information of a respective clock domain to each other, for example, may send a data frame or a management frame that carries the clock domain identification information to each other. Therefore, the two devices can be aware of the clock domain of each other. In an example, specifically, a Wi-Fi link needs to be established between the device A1 and the device B1 as described above. In this case, the device A1 is aware of the clock domain B by receiving a data frame or a management frame that carries clock domain identification information and that is sent by the device B 1. Similarly, the device B 1 may also be aware of the clock domain A by receiving a data frame or a management frame that carries clock domain identification information and that is sent by the device A1.

The foregoing example describes the clock domain awareness solution. The following describes, by using an example, a solution in which a device in the clock domain A determines whether to join in another clock domain when the device in the clock domain A is aware of existence of the another clock domain.

In some embodiments, when the device in the clock domain A, for example, the device A1, is aware of the clock domain B, it may be determined whether the device A1 is within signal coverage of a master device in the clock domain B. For example, when the management frame or the data frame sent by the master device in the clock domain B may be received by the device A1, it may be determined that A1 is within the signal coverage of the master device in the clock domain B. When device A1 is within the signal coverage of the clock domain B, the device A1 may join in the clock domain B. A solution for joining in the clock domain B is described below, and details are not described herein.

It may be set that the device A1 is aware of the clock domain B by listening to the management frame or the data frame sent by the device B1 in the clock domain B. The following describes solutions for determining, in different cases, whether the device A1 is within the signal coverage of the master device in the clock domain B.

Case a1: It may be set that the device B 1 is the master device in the clock domain B. When the device A1 listens to the management frame or the data frame sent by the device B1, it may be determined that the device A1 is within the signal coverage of the master device in the clock domain B. In other words, in the case a1, when the device A1 is aware of the clock domain B, it is determined that the device A1 is within the signal coverage of the master device in the clock domain B. In addition, for the Wi-Fi frame (including the management frame and the data frame), a frame header of the Wi-Fi frame carries a MAC address of a device sending the Wi-Fi frame, and a basic service set identifier (basic service set identifier, BSSID) generated based on an address of the master device. When listening to the Wi-Fi frame, the device A1 may generate a BSSID based on the MAC address that is of the device sending the Wi-Fi frame and that is carried in the frame header. If the generated BSSID is the same as the BSSID carried in the frame header of the Wi-Fi frame, it may be determined that the device sending the Wi-Fi frame is the master device. If the generated BSSID is different from the BSSID carried in the frame header of the Wi-Fi frame, it may be determined that the device sending the Wi-Fi frame is not the master device. Therefore, the device A1 may determine, based on the MAC address and the BSSID that are carried in the frame header of the management frame or the data frame sent by the device B 1, whether the device B 1 is the master device in the clock domain B.

Case a2: It may be set that the device B 1 is not the master device in the clock domain B. When listening to the management frame or the data frame sent by the device B1, the device A1 may determine an address of the master device in the clock domain B based on information carried in the management frame or the data frame, for example, a BSSID. The device A1 may send frame request information to the master device in the clock domain B based on the address of the master device in the clock domain B. In an example, the frame request information may be specifically a sync request action frame. If receiving the frame request information, the master device in the clock domain B may send a preset frame to the device A1 in response to the frame request information. In an example, the preset frame may be specifically a beacon frame. If the device A1 receives the preset frame, it may be determined that the device A1 is within the signal coverage of the master device in the clock domain B. If the device A1 fails to receive the preset frame, it may be determined that the device A1 is not within the signal coverage of the master device in the clock domain B.

In some embodiments, after it is determined that the device A1 is within the signal coverage of the master device in the clock domain B, the device A1 further needs to determine whether the master device in the clock domain B meets a preset condition C1 and a preset condition C2. If the master device in the clock domain B meets the condition C1 and the condition C2, the device A1 may join in the clock domain B. A solution for joining in the clock domain B is described below, and details are not described herein.

The following describes how to determine, in different cases, whether the master device in the clock domain B meets the condition C1. For ease of description, in the following descriptions, the master device in the clock domain B may be referred to as a master device B0 for short, and the master device in the clock domain A may be referred to as a master device A0 for short.

Case b1: It may be set that the device A1 is not the master device in the clock domain A, that is, not the master device A0. The condition C1 may include a condition C11. That the condition C1 is met includes that the condition C11 is met. That the master device B0 meets the condition C11 may specifically be whether quality B01 of a signal between the master device B0 and the device A1 is greater than quality A01 of a signal between the master device A0 and the device A1, and a value of the quality B01 of the signal minus the quality A01 of the signal is greater than or equal to a preset difference. In an example, the quality of the signal may be specifically represented by an RSSI. The preset difference may be 20 dB. For example, the condition C1 may further include a condition C12. That the condition C1 is met may include that the condition C12 is met. That the master device B0 meets the condition C12 may specifically be that the quality B01 of the signal between the master device B0 and the device A1 is greater than or equal to a preset value. In an example, the quality of the signal may be specifically represented by the RSSI. The preset value may be -72 dB.

Case b2: It may be set that the device A1 is the master device A0. The condition C1 may include a condition C12. For details that the master device B meets the condition C12, refer to the foregoing descriptions of the case b1. Details are not described herein again.

When the master device B0 meets the condition C1, it may be further determined whether the master device B0 meets the condition C2. For example, that the master device B0 meets the condition C2 may specifically mean that a ranking priority (ranking priority, RP) of the master device B0 is greater than a ranking priority of the master device A0. The management frames sent by the master device and the slave device in the clock domain may carry a master device election attribute (master election attribute) field, and the master device election attribute field may include a ranking priority of the master device. As described above, the device A1 is within the signal coverage of the master device B0. Therefore, the device A1 may listen to the management frame sent by the master device B0, and obtain the ranking priority of the master device B0.

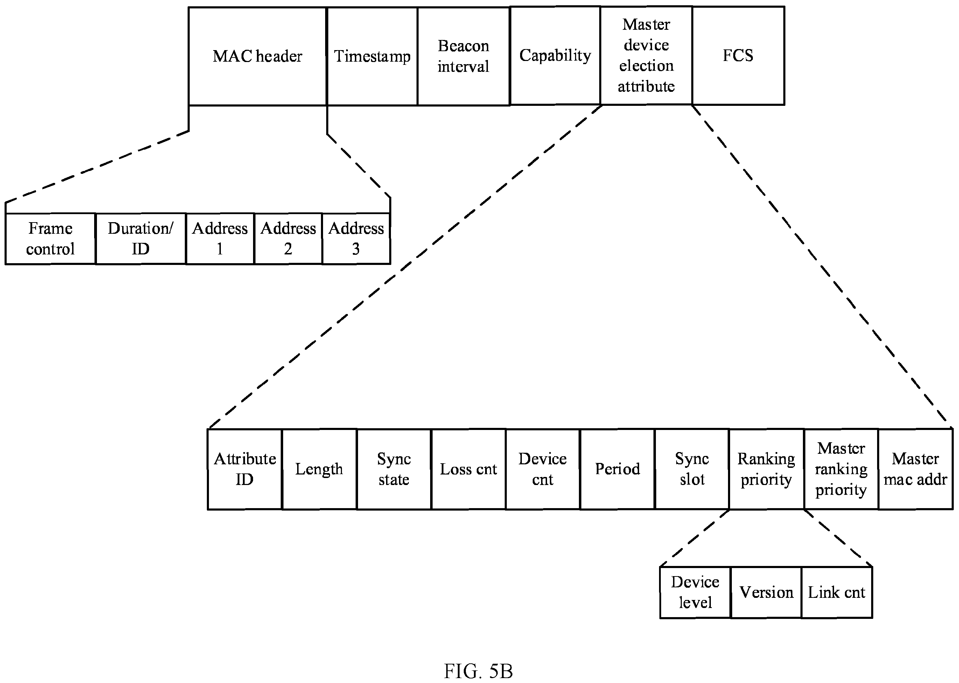

In an example, a beacon frame is used as an example to specifically describe the ranking priority of the master device. FIG. 5B shows a structure of a beacon frame. As shown in FIG. 5B, the beacon frame has a master device election attribute field. FIG. 5B further shows a specific structure of the master device election attribute field of the beacon frame, where the master device election attribute field includes a ranking priority field, and is filled with a ranking priority of a device sending the beacon frame. The ranking priority field may include three sub-fields, which are filled with a device level (device level), a protocol version (version), and a link count (link cnt). Still refer to FIG. 5B. The master device election attribute field further includes a master ranking priority field, filled with a ranking priority of a master device. When the device sending the beacon frame is the master device, content in the master ranking priority field is consistent with that in the ranking priority field. When the device sending the beacon frame is a slave device, content filled in the master ranking priority field is content parsed out by the slave device from a ranking priority field of a beacon frame sent by the master device.

Based on the foregoing solution, the device A1 may determine whether to join in the clock domain B. After determining to join in the clock domain B, the device A1 may start a clock domain merge procedure.

In addition, when the device A1 is aware of the clock domain B because the Wi-Fi link needs to be established between the device A1 and the device B1, the device A1 and the device B1 may determine, by comparing the ranking priority of the master device A0 (the master device in the clock domain A) and the ranking priority of the master device B0 (the master device in the clock domain B), whether the device A1 joins in the clock domain B or the device B1 joins in the clock domain A. When the ranking priority of the master device A0 is lower than the ranking priority of the master device B0, the device A1 determines to join in the clock domain B, and starts the clock domain merge procedure. If the ranking priority of the master device A0 is higher than the ranking priority of the master device B0, the device B1 determines to join in the clock domain A, and starts the clock domain merge procedure.

A specific manner in which the device B1 obtains the ranking priority of the master device A0 and the device A1 obtains the ranking priority of the master device B0 may be that the device A1 may be set as a service initiator or a link establishment initiator and the device A1 may send an association request (association request) frame to the device B1. The association request frame carries a master device election attribute field. After receiving the association request frame sent by the device A1, the device B1 may obtain the ranking priority of the master device A0 from the master device election attribute field carried in the association request frame. The device B1 may send an association response (association response) frame to the device A1 in response to the association request frame sent by the device A1. The association response frame carries a master device election attribute field. After receiving the association response frame sent by the device B1, the device A1 may obtain the ranking priority of the master device B0 from the master device election attribute field carried in the association response frame.

The association request frame in this embodiment of this application is obtained by adding the master device election attribute field to a frame body of an association request frame defined in the standard 802.11. The association response frame in this embodiment of this application is obtained by adding the master device election attribute field to a frame body of an association response frame defined in the standard 802.11.

A specific reason why the device A1 and the device B1 may determine, by comparing the ranking priority of the master device A0 and the ranking priority of the master device B0, to join in a specific clock domain is as follows:

After the Wi-Fi link is established between the device A1 and the device B1, an island in which the device A1 is located and an island in which the device B1 is located are merged into a same island. It may be understood that, in the merged island, there is a device within the signal coverage of the master device A0 exists, and there is also a device within the signal coverage of the master device B0. Therefore, assuming that the device A1 determines to join in the clock domain B, even if the device A1 is outside the signal coverage of the master device B0, the device A1 may also synchronize a clock to a clock of the master device B0 via another device in the island. Similarly, assuming that the device B1 determines to join in the clock domain A, even if the device B1 is outside the signal coverage of the master device A0, the device B1 may also synchronize a clock to a clock of the master device A0 via another device in the island. Therefore, the device A1 does not need to determine whether the device A1 is within the signal coverage of the master device B0 and whether the master device B0 meets the condition C1, and the device B1 does not need to determine whether the device B1 is within the signal coverage of the master device A0 and whether the master device A0 meets the condition C1. A solution for synchronizing the clock of the device outside the signal coverage of the master device in the island to the clock of the master device is specifically described below, and details are not described herein.

The following uses an example in which the device A1 determines to join in the clock domain B and starts the clock domain merge procedure to describe the clock domain merge procedure in different cases.

In some embodiments, with reference to FIG. 3 or FIG. 4A, it may be set that the device A1 is a device in the island D1, and the device A1 is neither an island owner nor the master device in the clock domain A. In this case, the clock domain merge procedure may be divided into five phases. Phase P1a: The device A1 joins in the clock domain B. Phase P2a: The island owner of the island D1 joins in the clock domain B. Phase P3a: The island owner of the island D1 assists a device other than the device A1 in the island D1 in joining in the clock domain B. Phase P4a: The master device A0 joins in the clock domain B. Phase P5a: The master device A0 assists a device other than the island D1 in the clock domain A in joining in the clock domain B.

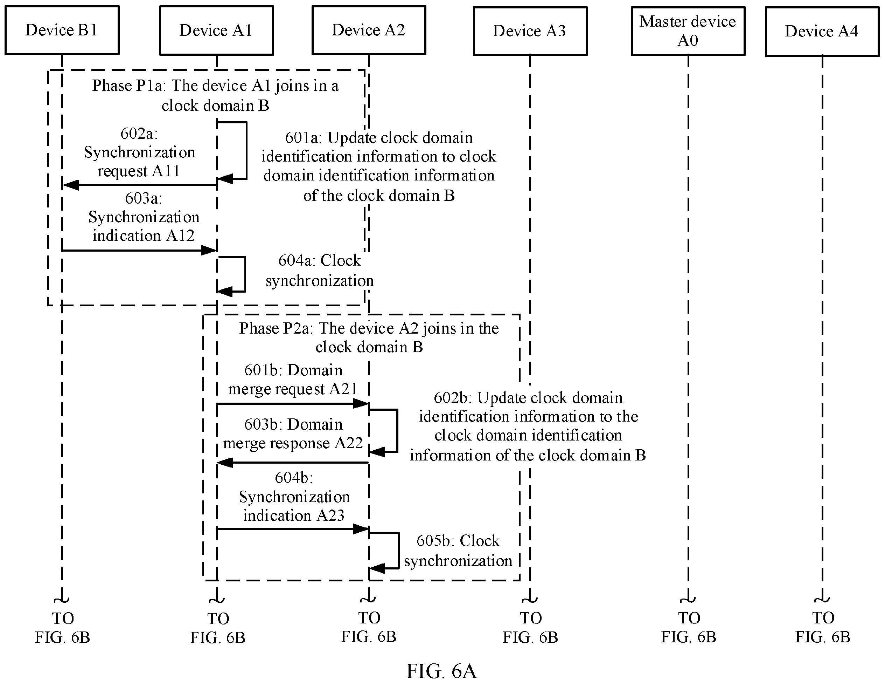

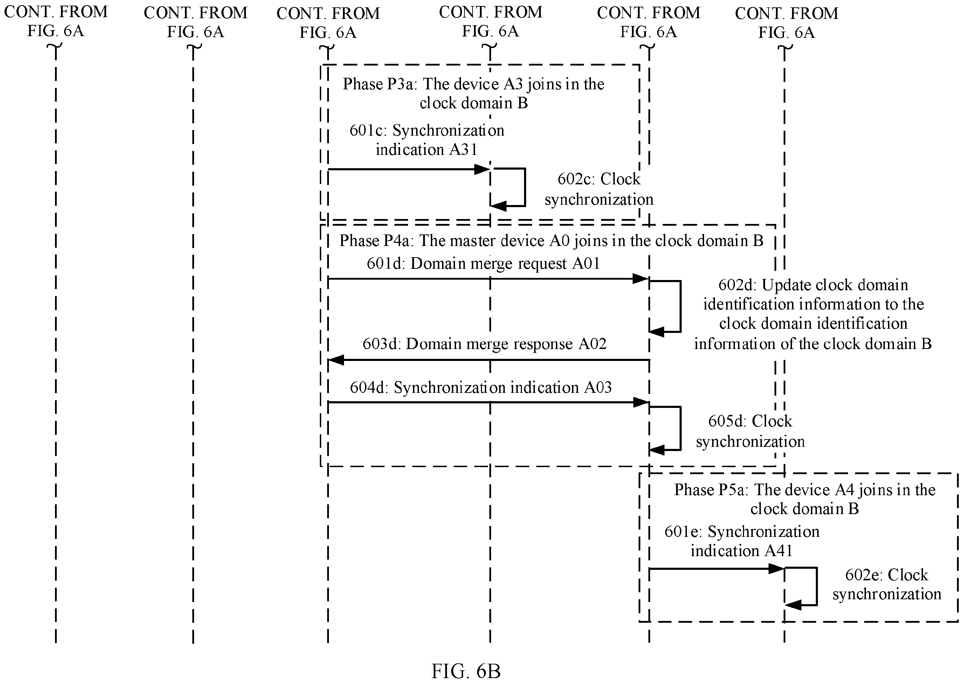

Next, with reference to FIG. 6A and FIG. 6B, the foregoing five phases are described by using an example in which the device A2 is the island owner of the island D1, the device A3 is another device in the island D1, and the device A4 is the device other than the island D1 in the clock domain A. The master device A0 may be any one of the device A5, the device A6, and the device A7 shown in FIG. 3 or FIG. 4A.

Refer to FIG. 6A and FIG. 6B. The device A1 may perform step 601a of updating clock domain identification information to clock domain identification information of the clock domain B. As described above, the management frame or the data frame sent by the device B1 carries the clock domain identification information of the clock domain B. When listening to the management frame or the data frame sent by the device B1, the device A1 may extract the clock domain identification information of the clock domain B from the management frame or the data frame, and store or record the clock domain identification information of the clock domain B as clock domain identification information of a clock domain in which the device A1 is located.

The device A1 may perform step 602a of sending a synchronization request A11 to the device B1. For example, the synchronization requestA11 may be specifically a sync request action frame. The sync request action frame is specifically described below, and details are not described herein.

After receiving the synchronization request A11, the device B1 may perform step 603a of sending a synchronization indication A12 to the device A1. The synchronization indication A12 carries a sending moment of the synchronization indication A12, and the clock domain identification information of the clock domain B is filled in a field for filling the clock domain identification information in the synchronization indication A12. In an example, the synchronization indication A12 is specifically a beacon frame. The Addr3 field of the beacon frame is filled with the clock domain identification information of the clock domain B. The sending moment of the synchronization indication A12 may be specifically a sending moment of the beacon frame. The sending moment of the beacon frame may be specifically represented by a timing synchronization function (timing synchronization function, TSF). Back to FIG. 5B, the beacon frame includes a timestamp field. A MAC function entity of the device B1 may fill the timestamp field of the beacon frame with the TSF.

After receiving the synchronization indication A12, the device A1 may perform step 604a of performing clock synchronization. Specifically, the device A1 finds that the clock domain identification information carried in the synchronization indication A12 is the same as the clock domain identification information stored in the deviceA1, and may perform clock synchronization based on the sending moment of the synchronization indication A12 carried in the synchronization indication A12. For example, the sending moment of the synchronization indication A12 is specifically a TSF used when the synchronization indication A12 is sent, and the device A1 may update a TSF of the device A1 based on the TSF used when the synchronization indication A12 is sent. In this way, the clock may be synchronized to the clock domain B, so that the device A1 joins in the clock domain B.

After joining in the clock domain B, the device A1 may assist the device A2, that is, the island owner of the island in which the device A1 is located, in joining in the clock domain B. Specifically, with reference to FIG. 6A and FIG. 6B, the device A1 may perform step 601b of sending a domain merge request A21 to the device A2. In an example, the domain merge request A21 may be specifically a domain merge request frame. The domain merge request frame is specifically described below, and details are not described herein. The domain merge request A21 may carry information about the master device B0 in the clock domain B. The information about the master device B0 may include identification information (for example, a MAC address) of the master device, or may include the clock domain identification information of the clock domain B.

The device A2 may perform step 602b of updating clock domain identification information to the clock domain identification information of the clock domain B. When the domain merge request A21 carries the identification information of the master device B0, the device A2 may generate the clock domain identification information of the clock domain B based on the identification information of the master device B0, and then update the clock domain identification information to the clock domain identification information of the clock domain B. For a generation rule of the clock domain identification information, refer to the foregoing descriptions. Details are not described herein again. When the domain merge request A21 carries the clock domain identification information of the clock domain B, the device A2 may update the clock domain identification information to the clock domain identification information of the clock domain B based on the clock domain identification information of the clock domain B.

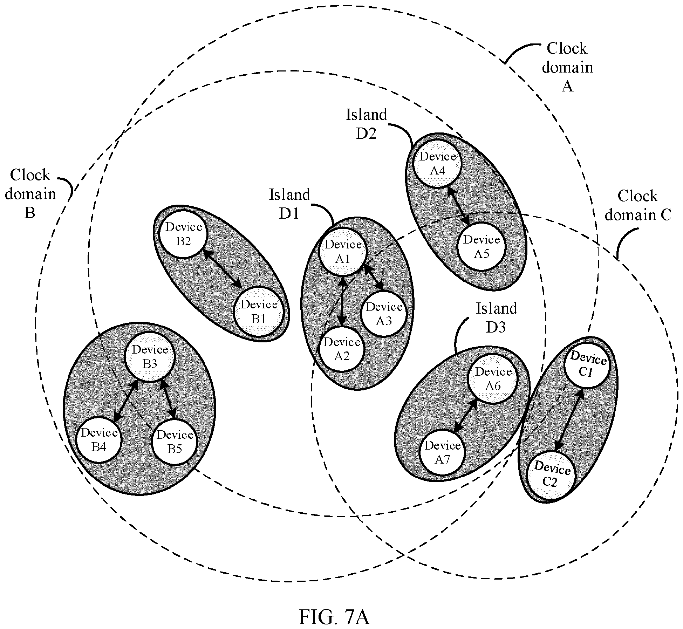

In some embodiments, with reference to FIG. 7A, there may be further a clock domain C formed by a device C1, a device C2, and the like in the place 100. The device A3 may listen to a management frame or a data frame sent by the device C1 or the device C2, and then is aware of the clock domain C. In addition, when the device A3 is within signal coverage of a master device in the clock domain C and the master device in the clock domain C meets the conditions C1 and C2, the device A3 may initiate the clock domain merge procedure. Therefore, when receiving the domain merge request A21, the device A2 also receives a domain merge request sent by the device A3. In this case, before performing step 602, the device A2 may determine whether to update the clock domain identification information to the clock domain identification information of the clock domain B, or update the clock domain identification information to clock domain identification information of the clock domain C. In other words, the device A2 determines whether to join in the clock domain B or the clock domain C. A specific process may be as follows:

As described above, the domain merge request A21 may carry the information about the master device B0 in the clock domain B. The information about the master device B0 may include one or more of quality of a signal between the master device B0 and the device A1, a link count of the master device B0, a ranking priority of the master device B0, and other information. Similarly, the domain merge request sent by the device A3 may also include information about a master device C0 in the clock domain C. The information about the master device C0 may also include one or more of quality of a signal between the master device C0 and the device A3, a link count of the master device C0, a ranking priority of the master device C0, and other information. The device A2 may compare the information about the master device B0 and the information about the master device in the clock domain C, and then determine whether to update the clock domain identification information to the clock domain identification information of the clock domain B, or update the clock domain identification information to the clock domain identification information of the clock domain C. In an example, when the quality of the signal between the master device B0 and the device A1 is greater than the quality of the signal between the master device C0 and the device A3, the device A2 updates the clock domain identification information to the clock domain identification information of the clock domain B. In an example, when the ranking priority of the master device B0 is higher than the ranking priority of the master device C0, the device A2 updates the clock domain identification information to the clock domain identification information of the clock domain B. Details are not listed herein one by one.

It may be set that the device A2 performs step 602b of updating the clock domain identification information to the clock domain identification information of the clock domain B. The device A2 may perform step 603b of sending a domain merge response A22 to the device A1. For example, the domain merge response A22 may be specifically a domain merge response frame. The domain merge response frame is specifically described below, and details are not described herein. For example, the domain merge response A22 may carry a clock domain merge accept indication, to indicate that the device A2 accepts joining in the clock domain B. The device A1 may perform step 604b of sending a synchronization indication A23 to the device A2 in response to the domain merge response A22. The synchronization indication A23 carries a sending moment of the synchronization indication A23, and the clock domain identification information of the clock domain B is filled in a field for filling the clock domain identification information in the synchronization indication A23. In an example, the synchronization indication A23 is specifically a beacon frame. The Addr3 field of the beacon frame is filled with the clock domain identification information of the clock domain B. The sending moment of the synchronization indication A23 may be specifically a TSF used when the beacon frame is sent.

After receiving the synchronization indication A23, the device A2 may perform step 605b of performing clock synchronization. Specifically, the device A2 finds that the clock domain identification information carried in the synchronization indication A23 is the same as the clock domain identification information stored in the device A2, and may perform clock synchronization based on the sending moment of the synchronization indication A23 carried in the synchronization indication A23. For example, the sending moment of the synchronization indication A23 is specifically a TSF used when the synchronization indication A23 is sent, and the device A2 may update a TSF of the device A2 based on the TSF used when the synchronization indication A23 is sent. In this way, the clock may be synchronized to the clock domain B, so that the device A2 joins in the clock domain B.

For example, the device A2 may send a domain merge response to the device A3, where the domain merge response may carry a clock domain merge reject indication, to indicate that the device A2 refuses to join in the clock domain C. After receiving the domain merge response, the device A3 may end the clock domain merge procedure started by the device A3. In some embodiments, when ending the clock domain merge procedure started by the device A3, the device A3 may re-modify the clock domain identification information to the clock domain identification information of the clock domain A.

In addition, after the device A1 sends the synchronization indication A23 to the device A2, the device A1 may exit the clock domain merge procedure. In other words, after the device A1 sends the synchronization indication A23 to the device A2, the device A1 has been merged into the clock domain B and has completed a task of assisting the device A2 in entering the clock domain B, and the device A1 is not required in a subsequent procedure. In this case, the device A1 has completed the clock domain merge procedure. Therefore, the device A1 may exit the clock domain merge procedure.

In some embodiments, when the device is in the clock domain merge procedure, the device no longer detects another clock domain, and no longer responds to a request for joining in the another clock domain. In other words, the device cannot perform the clock domain merge procedure in parallel. At a same moment, one device performs only one clock domain merge procedure.

Still refer to FIG. 6A and FIG. 6B. After joining in the clock domain B, the device A2 may indicate the device A3 to join in the clock domain B. Specifically, as shown in FIG. 6A and FIG. 6B, the device A2 may perform step 601c of sending a synchronization indication A31 to the device A3.

In some embodiments, it may be understood that devices in a same island operate on a same channel. Therefore, to improve clock domain merge efficiency, the device A2 may broadcast the synchronization indication A31 on an operating channel. In this way, all devices in the island including the device A3 may listen to the synchronization indication A31. For example, the device A2 may broadcast the synchronization indication A31 on the operating channel in N consecutive slots. N is a positive integer greater than or equal to 1. In an example, N is specifically 3.

In some embodiments, the synchronization indication A31 may carry the clock domain identification information of the clock domain A. For example, the synchronization indication A31 may be a beacon frame, and the Addr3 field of the beacon frame is filled with the clock domain identification information of the clock domain A.

The synchronization indication A31 may include a sending moment of the synchronization indication A31. For example, the synchronization indication A31 is specifically the beacon frame, and the sending moment of the synchronization indication A31 may be specifically a TSF used when the beacon frame is sent.

The synchronization indication 31 may carry the information about the master device B0. For example, the information about the master device B0 carried in the synchronization indication 31 may include the MAC address of the master device B0. For example, the synchronization indication 31 may be the beacon frame, and a master mac addr3 sub-field of a master device election attribute field in the beacon frame may be filled with the MAC address of the master device B0.

After receiving the synchronization indication A31, the device A3 may perform step 602c of performing clock synchronization. Specifically, the device A3 finds that the clock domain identification information carried in the synchronization indication A31 is the same as the clock domain identification information stored in the device A3, and may perform clock synchronization based on the sending moment of the synchronization indication A31 carried in the synchronization indication A31. For example, the sending moment of the synchronization indication A31 is specifically a TSF used when the synchronization indication A31 is sent, and the device A3 may update a TSF of the device A3 based on the TSF used when the synchronization indication A31 is sent. In addition, the device A3 may update the master device of the device A3 based on the information about the master device B0 carried in the synchronization indication. For example, the MAC address of the master device B0 is updated to a MAC address of the master device of the device A3.

In addition, the device A3 may further update the clock domain identification information to the clock domain identification information of the clock domain B based on the information about the master device B0 carried in the synchronization indication. Specifically, the clock domain identification information of the clock domain B may be generated based on the information about the master device B0. For example, the clock domain identification information of the clock domain B is generated based on the MAC address of the master device B0. Then, the clock domain identification information is updated to the clock domain identification information of the clock domain B. In this way, the clock may be synchronized to the clock domain B, so that the device A3 joins in the clock domain B.

In some embodiments, after step 602b and before step 601c, because the device A3 has not entered the clock domain merge procedure started by the device A1, the device A3 may detect existence of another clock domain. For example, the device A3 detects existence of the clock domain C, and may send a domain merge request to the device A2. Because in this case, the device A2 is in the clock domain merge procedure initiated by the device A1, the device A2 responds to the domain merge request sent by the device A3. The domain merge request may carry a clock domain merge reject indication, to indicate that the device A2 refuses to join in the clock domain C. After receiving the domain merge response, the device A3 may end the clock domain merge procedure started by the device A3. In some embodiments, when ending the clock domain merge procedure started by the device A3, the device A3 may re-modify the clock domain identification information to the clock domain identification information of the clock domain A.

When there are other devices of the device A1 and the device A3 in the island in which the device A2 is used as the island owner, for a process of joining in the clock domain B by the other devices, refer to the process of joining in the clock domain B by the device A3. Details are not described herein again.

In some embodiments, still with reference to FIG. 6A and FIG. 6B, the device A2 may assist the master device A0 to join in the clock domain B. Specifically, as shown in FIG. 6A and FIG. 6B, the device A2 may perform step 601d of sending a domain merge request A01 to the master device A0. For example, the device A2 may switch to an operating channel of the master device A0, and send the domain merge request A01 to the master device A0 on the operating channel. For example, the device A2 may send the domain merge request A01 to the master device A0 on a social channel.

In an example, the domain merge request A01 may be specifically a domain merge request frame. The domain merge request frame is specifically described below, and details are not described herein. The domain merge request A21 may carry the information about the master device B0 in the clock domain B. The information about the master device B0 may include the identification information (for example, the MAC address) of the master device, or may include the clock domain identification information of the clock domain B.

The master device A0 may perform step 602d of updating the clock domain identification information to the clock domain identification information of the clock domain B. When the domain merge request A01 carries the identification information of the master device B0, the master device A0 may generate the clock domain identification information of the clock domain B based on the identification information of the master device B0, and then update the clock domain identification information to the clock domain identification information of the clock domain B. When the domain merge request A01 carries the clock domain identification information of the clock domain B, the master device A0 may update the clock domain identification information to the clock domain identification information of the clock domain B based on the clock domain identification information of the clock domain B.

In some embodiments, it may be understood that the slave device needs to be within signal coverage of the master device, to receive the management frame sent by the master device. Before performing step 602d, the master device A0 may determine whether the master device A0 is within the signal coverage of the master device B0. As described above, the domain merge request A21 may carry the information about the master device B0. The information about the master device B0 may include the MAC address or the BSSID of the master device B0. The master device A0 may send frame request information to the master device B0 based on the MAC address or the BSSID of the device B0. In an example, the frame request information may be specifically a sync request action frame. If receiving the frame request information, the master device B0 may send a preset frame to the master device A0 in response to the frame request information. In an example, the preset frame may be specifically a beacon frame. If the master device A0 receives the preset frame, it may be determined that the master device A0 is within the signal coverage of the master device B0. If the master device A0 does not receive the preset frame, it may be determined that the master device A0 is not within the signal coverage of the master device B0.

In an illustrative example, in the scenario shown in FIG. 4A, a dashed line corresponding to the clock domain represents signal coverage of the master device in the clock domain, and the device A5, the device A6, and the device A7 in the clock domain A are within the signal coverage of the master device B0. The master device A0 is a device in the device A5, the device A6, and the device A7. Therefore, the master device A0 is within the signal coverage of the master device B0.

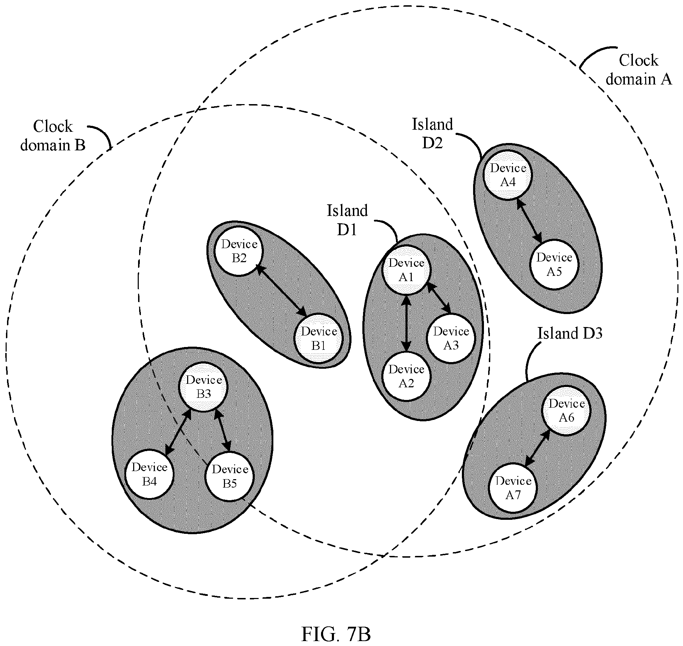

In an illustrative example, in the scenario shown in FIG. 7B, a dashed line corresponding to the clock domain represents signal coverage of the master device in the clock domain, and none of the device A5, the device A6, and the device A7 in the clock domain A is within the signal coverage of the master device B0. Therefore, the master device A0 is not within the signal coverage of the master device B0.

When the master device A0 determines that the master device A0 is within the signal coverage of the master device B0, the master device A0 may perform step 602d. Then, the master device A0 may perform step 603d of sending a domain merge response A02 to the device A2. For example, the domain merge response A02 may be specifically a domain merge response frame.

The device A2 may perform step 604b of sending a synchronization indication A03 to the master device A0 in response to the domain merge response A02. The synchronization indication A03 carries a sending moment of the synchronization indication A03, and the clock domain identification information of the clock domain B is filled in a field for filling the clock domain identification information in the synchronization indication A03. In an example, the synchronization indication A03 is specifically a beacon frame. The Addr3 field of the beacon frame is filled with the clock domain identification information of the clock domain B. The sending moment of the synchronization indication A03 may be specifically a TSF used when the beacon frame is sent.

In some embodiments, after performing step 604b, the device A2 may exit the clock domain merge procedure.

After receiving the synchronization indication A03, the master device A0 may perform step 605d of performing clock synchronization. Specifically, the master device A0 finds that the clock domain identification information carried in the synchronization indication A03 is the same as the clock domain identification information stored by the master device A0, and may perform clock synchronization based on the sending moment of the synchronization indication A03 carried in the synchronization indication A03. For example, the sending moment of the synchronization indication A03 is specifically a TSF used when the synchronization indication A03 is sent, and the master device A0 may update a TSF of the master device A0 based on the TSF used when the synchronization indication A03 is sent. In this way, the clock may be synchronized to the clock domain B, so that the master device A0 joins in the clock domain B.

After joining in the clock domain B, the master device A0 may indicate a slave device of the master device A0 to join in the clock domain B. Still refer to FIG. 6A and FIG. 6B. A process in which the master device A0 indicates the slave device of the master device A0 to join in the clock domain B is described by using the device A4 as an example.

As shown in FIG. 6A and FIG. 6B, the master device A0 may perform step 601e of sending a synchronization indication A41 to the device A4.

In some embodiments, the master device A0 may broadcast the synchronization indication A41 on the social channel. In this way, the slave device of the master device A0, including the device A4, may listen to the synchronization indication A41. For example, the master device A0 may broadcast the synchronization indication A41 on the social channel in N consecutive slots. N is a positive integer greater than or equal to 1. In an example, N is specifically 3. After the master device A0 broadcasts the synchronization indication A41 on the social channel in the N consecutive slots, the master device A0 may exit the clock domain merge procedure.

In some embodiments, the synchronization indication A41 may carry the clock domain identification information of the clock domain A. For example, the synchronization indication A41 may be a beacon frame, and the Addr3 field of the beacon frame is filled with the clock domain identification information of the clock domain B.

The synchronization indication A41 may include a sending moment of the synchronization indication A41. For example, the synchronization indication A41 is specifically the beacon frame, and the sending moment of the synchronization indication A41 may be specifically a TSF used when the beacon frame is sent.

The synchronization indication 41 may carry the information about the master device B0. For example, the information about the master device B0 carried in the synchronization indication 41 may include the MAC address of the master device B0. For example, the synchronization indication 41 may be the beacon frame, and a master mac addr3 sub-field of a master device election attribute field in the beacon frame may be filled with the MAC address of the master device B0.

After receiving the synchronization indication A41, the device A4 may perform step 602e of performing clock synchronization. For details, refer to the foregoing descriptions of step 602c. Details are not described herein again. In addition, a device such as the device A4 within the signal coverage of the master device A0 may receive the synchronization indication A41, and then perform clock synchronization. As described above, in this embodiment of this application, it is not required that each device in a same clock domain be within signal coverage of a master device in the clock domain. Therefore, there may be a device outside the signal coverage of the master device A0 in the clock domain A. The device outside the signal coverage of the master device A0 cannot receive the synchronization indication A41, and it is difficult to perform clock synchronization based on the synchronization indication A41. The device outside the signal coverage of the master device A0 may perform clock synchronization in a clock synchronization manner of a device with single-point out-of-synchronization. The device with single-point out-of-synchronization is a device on which single-point out-of-synchronization occurs. The following describes the single-point out-of-synchronization and the clock synchronization manner of the device with single-point out-of-synchronization, and details are not described herein.

In addition, for implementation of a solution in which a device other than the device A1, the device A2, the device A3, and the device A4 in the slave devices of the master device A0 joins in the clock domain B, refer to the solution in which the device A4 joins in the clock domain B. Details are not described herein again.

In this case, when the device A1 is neither the island owner nor the master device in the clock domain A, the clock domain A is merged into the clock domain B. After the device originally located in the clock domain A is merged into the clock domain B, the device serves as a slave device of the master device B0 and accepts scheduling of the master device B0, so that channel resource scheduling can be optimized, channel resources can be fully used, mutual interference between devices is reduced, and communication experience of a user is improved.

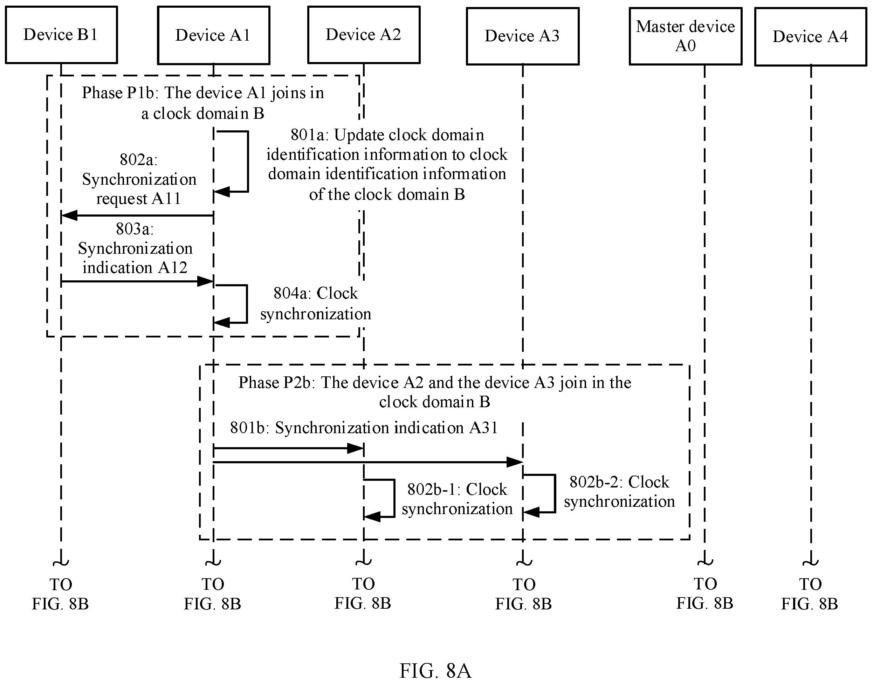

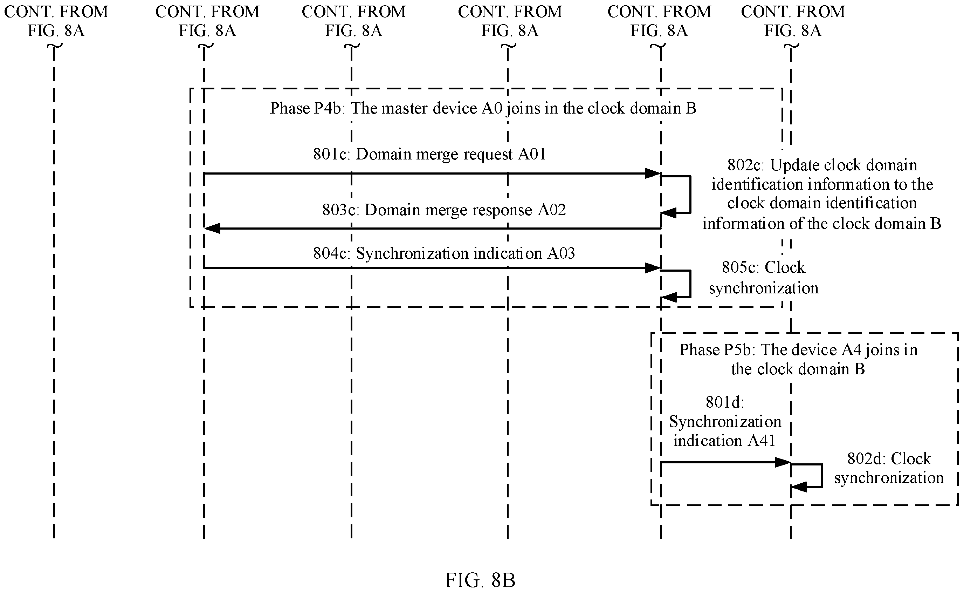

The foregoing describes, by using an example, the solution for merging the clock domain A into the clock domain B when the device A1 is neither the island owner nor the master device in the clock domain A. Next, with reference to FIG. 8A and FIG. 8B, a solution for merging the clock domain A into the clock domain B when the device A1 is the island owner and is not the master device in the clock domain is described.

In some embodiments, with reference to FIG. 3 or FIG. 4A, it may be set that the device A1 is the island owner of the island D1 and is not the master device in the clock domain A. In this case, the clock domain merge procedure may be divided into four phases. Phase P1b: The device A1 joins in the clock domain B Phase P2b: The device A1 assists another device in the island in joining in the clock domain B. Phase P3b: The master device A0 joins in the clock domain B. Phase P4b: The master device A0 assists a device other than the island D1 in the clock domain A in joining in the clock domain B.

Next, with reference to FIG. 8A and FIG. 8B, the foregoing four phases are described by using an example in which the device A1 is the island owner of the island D1, the device A2 and the device A3 are non-island owner devices in the island D1, and the device A4 is a device other than the island D1 in the clock domain A. The master device A0 may be any one of the device A5, the device A6, and the device A7 shown in FIG. 3 or FIG. 4A.

As shown in FIG. 8A and FIG. 8B, in the phase P1b, the device A1 may perform step 801a of update clock domain identification information to clock domain identification information of the clock domain B. For details, refer to the foregoing descriptions of step 601a in FIG. 6A and FIG. 6B. Details are not described herein again. The device A1 may further perform step 802a of sending a synchronization request A11 to the device B1. For details, refer to the foregoing descriptions of step 602a in FIG. 6A and FIG. 6B. Details are not described herein again. The device B1 may perform step 803a of sending a synchronization indication A12 to the device A1. For details, refer to the foregoing descriptions of step 603a in FIG. 6A and FIG. 6B. Details are not described herein again. The device A1 may perform step 804a of performing clock synchronization. For details, refer to the foregoing descriptions of step 604a in FIG. 6A and FIG. 6B. Details are not described herein again.

In the phase P2b, the device A1 may perform step 801b of sending a synchronization indication A31 to the device A2 and the device A3. For example, the device A1 may broadcast the synchronization indication A31 on an operating channel. Therefore, the device A2 and the device A3 receive the synchronization indication A31. For details, refer to the foregoing descriptions of step 601c in FIG. 6A and FIG. 6B. Details are not described herein again.

The device A2 may perform step 802b-1 of performing clock synchronization. The device A3 may perform step 802b-2 of performing clock synchronization. For details, refer to the foregoing descriptions of step 602c in FIG. 6A and FIG. 6B. Details are not described herein again.

Still refer to FIG. 8A and FIG. 8B. In the phase P4b, the device A1 may perform step 801c of sending a domain merge request A01 to the master device A0. For details, refer to the foregoing descriptions of step 601d in FIG. 6A and FIG. 6B. Details are not described herein again. The master device A0 may perform step 802c of updating clock domain identification information to the clock domain identification information of the clock domain B. For details, refer to the foregoing descriptions of step 602d in FIG. 6A and FIG. 6B. Details are not described herein again. The master device A0 may perform step 803c of sending a domain merge response A02 to the device A1. For details, refer to the foregoing descriptions of step 603d in FIG. 6A and FIG. 6B. Details are not described herein again. The device A1 may perform step 804c of sending a synchronization indication A03 to the master device A0. For details, refer to the foregoing descriptions of step 604d in FIG. 6A and FIG. 6B. Details are not described herein again. The master device A0 may perform step 805c of performing clock synchronization. For details, refer to the foregoing descriptions of step 605d in FIG. 6A and FIG. 6B. Details are not described herein again.

Still refer to FIG. 8A and FIG. 8B. In the phase P5b, the master device A0 may perform step 801d of sending a synchronization indication A41 to the device A4. For details, refer to the foregoing descriptions of step 601e in FIG. 6A and FIG. 6B. Details are not described herein again. The device A4 may perform step 802d of performing clock synchronization. For details, refer to the foregoing descriptions of step 602e in FIG. 6A and FIG. 6B. Details are not described herein again.

In addition, for implementation of a solution in which a device other than the device A1, the device A2, the device A3, and the device A4 in the slave devices of the master device A0 joins in the clock domain B, refer to the solution in which the device A4 joins in the clock domain B. Details are not described herein again.

In this case, when the device A1 is the island owner and is not the master device in the clock domain A, the clock domain A is merged into the clock domain B. After the device originally located in the clock domain A is merged into the clock domain B, the device serves as a slave device of the master device B0 and accepts scheduling of the master device B0, so that channel resource scheduling can be optimized, channel resources can be fully used, mutual interference between devices is reduced, and communication experience of a user is improved.

The foregoing describes, by using an example, the solution for merging the clock domain A into the clock domain B when the device A1 is the island owner and is not the master device in the clock domain A. Next, with reference to FIG. 8A and FIG. 8B, a solution for merging the clock domain A into the clock domain B when the device A1 is the master device in the clock domain A is described.

In some embodiments, with reference to FIG. 3 or FIG. 4A, it may be set that the device A1 is the master device in the clock domain A. In this case, the clock domain merge procedure may be divided into two phases. Phase P1c: The device A1 joins in the clock domain B. Phase P2c: The device A1 indicates a slave device of the device A1 to join in the clock domain B.

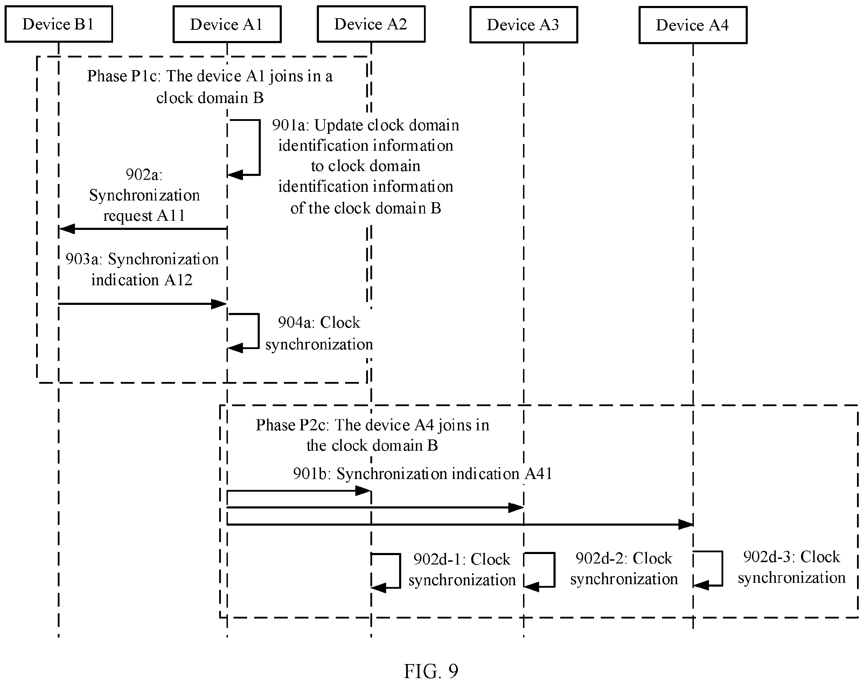

Next, with reference to FIG. 9, the foregoing two phases are described by using an example in which the device A1 is the master device in the clock domain A, and slave devices of the device A1 include the device A2, the device A3, and the device A4.

As shown in FIG. 9, in the phase P1c, the device A1 may perform step 901a of update clock domain identification information to clock domain identification information of the clock domain B. For details, refer to the foregoing descriptions of step 601a in FIG. 6A and FIG. 6B. Details are not described herein again. The device A1 may further perform step 902a of sending a synchronization request A11 to the device B1. For details, refer to the foregoing descriptions of step 602a in FIG. 6A and FIG. 6B. Details are not described herein again. The device B1 may perform step 903a of sending a synchronization indication A12 to the device A1. For details, refer to the foregoing descriptions of step 603a in FIG. 6A and FIG. 6B. Details are not described herein again. The device A1 may perform step 904a of performing clock synchronization. For details, refer to the foregoing descriptions of step 604a in FIG. 6A and FIG. 6B. Details are not described herein again.

In the phase P2c, the device A1 may perform step 901b of sending a synchronization indication A41 to the slave devices including the device A2, the device A3, and the device A4. For example, the device A1 may broadcast the synchronization indication A41 on a social channel. Therefore, the slave devices of the device A1 may receive the synchronization indication A41. For details, refer to the foregoing descriptions of step 601e in FIG. 6A and FIG. 6B. Details are not described herein again.

The device A2, the device A3, and the device A4 may respectively perform step 902b-1, step 902b-2, and step 902-3 of performing clock synchronization. For details, refer to the foregoing descriptions of step 602e in FIG. 6A and FIG. 6B. Details are not described herein again.

In addition, for implementation of a solution in which a device other than the device A1, the device A2, the device A3, and the device A4 in the slave devices of the master device A0 joins in the clock domain B, refer to the solution in which the device A2 joins in the clock domain B. Details are not described herein again.

In this case, when the device A1 is the master device in the clock domain A, the clock domain A is merged into the clock domain B. After the device originally located in the clock domain A is merged into the clock domain B, the device serves as a slave device of the master device B0 and accepts scheduling of the master device B0, so that channel resource scheduling can be optimized, channel resources can be fully used, mutual interference between devices is reduced, and communication experience of a user is improved.

An embodiment of this application further provides a clock synchronization method, to resolve a problem of how to synchronize a clock to a clock of a master device when a slave device is out of synchronization with the master device. That the slave device is out of synchronization with the master device may mean that the slave device fails to receive a beacon frame sent by the master device.

As described above, a master device in a clock domain A, that is, a master device A0, indicates a slave device of the master device to join in a clock domain B. One or more devices in slave devices of the master device A0 may not be within signal coverage of a master device B0, and therefore fails to receive the beacon frame sent by the master device, resulting in out-of-synchronization. In addition, when the master device has a power failure/is powered off/far away from a place 100, the slave device is far away from the place 100, the master device is changed to a device that is far away from the slave device, or the like, the slave device may also fail to receive the beacon frame sent by the master device, and out-of-synchronization occurs.

In some embodiments, out-of-synchronization caused by a master device problem may be referred to as domain out-of-synchronization. For example, out-of-synchronization caused because the master device has the power failure/is powered off/far away from the place 100 is domain out-of-synchronization. In some embodiments, as described above, in a synchronization slot of each scheduling period, the master device sends a beacon frame on a social channel, and the slave device sends a PNF frame on the social channel. When a slave device S 1 fails to receive, for M consecutive times (for example, out_of_sync_cnt consecutive times), the beacon frame sent by the master device in the synchronization slot, but may receive a PNF frame sent by another slave device, it may be determined that domain out-of-synchronization occurs. When the domain out-of-synchronization occurs, the slave device may initiate master device election to elect a new master device, and synchronize a clock to a clock of the new master device. For the master device election, refer to the descriptions in the conventional technology. Details are not described herein.

In some embodiments, out-of-synchronization caused by a problem of the slave device S1 may be referred to as single-point out-of-synchronization of the slave device S1. For example, out-of-synchronization of the slave device S1 caused because the slave device S1 is far away from the master device is referred to as single-point out-of-synchronization of the slave device S1. When the single-point out-of-synchronization of the slave device S1 occurs, another slave device is not out of synchronization. Whether the single-point out-of-synchronization of the slave device S1 occurs is determined by using the following solutions.

Solution a: When the slave device S1 fails to receive, for M consecutive times (for example, out_of_sync_cnt consecutive times), a beacon frame sent by the master device in the synchronization slot, and fails to receive a PNF frame sent by another slave device, it may be determined that the single-point out-of-synchronization of the slave device S1 occurs. A specific application scenario may be that the slave device S1 is far away from the master device and is also far away from the another slave device. As a result, the slave device S1 fails to receive the beacon frame sent by the master device, and fails to receive the PNF frame sent by the another slave device.

Solution b: When the slave device S1 determines that domain out-of-synchronization occurs and performs master device election accordingly, if the slave device S1 receives a PNF frame rather than a beacon frame from a new "master device" in a synchronization slot of a scheduling period, it may be determined that the single-point out-of-synchronization of the slave device S1 occurs. A specific application scenario may be that the slave device S1 is far away from the master device, but still maintains a close distance with one or more other slave devices (where the one or more slave devices may receive, in the synchronization slot, the beacon frame sent by the master device). Therefore, when the slave device S1 fails to receive the beacon frame sent by the master device, the slave device S1 may receive a PNF frame sent by the one or more slave devices. Consequently, it is mistakenly determined that the domain out-of-synchronization occurs. When it is mistakenly determined that the domain out-of-synchronization occurs, a new "master device" elected by the slave device S1 through master device election is a device in the one or more slave devices. Therefore, the new "master device" is merely a master device considered by the slave device S1, but not a real master device. In other words, the new "master device" is actually still a slave device. Therefore, the new "master device" sends a PNF frame in the synchronization slot, instead of a beacon frame.

In some embodiments, when it is determined that the single-point out-of-synchronization of the slave device S1 occurs, the slave device S1 may send a synchronization request to a device having a Wi-Fi link with the slave device S 1. For example, the synchronization request may be specifically a sync request action frame. It may be set that there is a Wi-Fi link between a device S2 and the slave device S1, and the slave device S1 sends a synchronization request to the device S2. The device S2 may send a synchronization indication to the slave device S 1 in response to the synchronization request. For example, the synchronization indication may be a beacon frame. The slave device S 1 may perform clock synchronization based on the synchronization indication, to synchronize a clock to a clock of the master device. For details, refer to the foregoing descriptions of step 602a to step 604a in FIG. 6A and FIG. 6B. Details are not described herein again.

In an illustrative example, the device S2 may send the synchronization indication to the slave device S 1 based on a preset period. In an example, the device S2 sends the synchronization indication to the slave device S 1 in a fixed slot of each period. For example, the device S2 and the slave device S 1 may exchange information over the Wi-Fi link.

In an illustrative example, the device S2 may be an island owner of an island in which the slave device S 1 is located. For example, the device S2 and the slave device S 1 may exchange information over the Wi-Fi link.

If the slave device S 1 fails to receive the synchronization indication from the device S2 after the slave device S 1 sends the synchronization request to the device S2. The slave device S 1 may continue to send a synchronization request to another device having a Wi-Fi link with the slave device S 1, to request a synchronization indication.

If all devices having Wi-Fi links with the slave device S1 do not send a synchronization indication to the slave device S1, it indicates that the Wi-Fi link of the slave device S1 may be faulty. In this case, regardless of whether the slave device S1 is in the synchronization slot, the slave device S1 may switch from the operating channel to the social channel, to listen to the beacon frame on the social channel again, and join in the clock domain again.

In some embodiments, when it is determined that the single-point out-of-synchronization of the slave device S1 occurs, the slave device S 1 may send a synchronization request to an island owner of an island in which the slave device S1 is located. For example, the synchronization request may be specifically a sync request action. The island owner may send a synchronization indication to the slave device S 1 in response to the synchronization request. The slave device S1 may perform clock synchronization based on the synchronization indication, to synchronize a clock to a clock of the master device. For details, refer to the foregoing descriptions of step 602a to step 604a in FIG. 6A and FIG. 6B. Details are not described herein again. For example, the synchronization indication may be a beacon frame.

In an illustrative example, the island owner may send the synchronization indication to the slave device S1 based on a preset period. In an example, the synchronization indication is sent to the slave device S1 in a fixed slot of each period. In an example, the island owner may send the synchronization indication to the slave device S1 on the operating channel.

If the slave device S1 fails to receive the synchronization indication from the island owner after sending the synchronization request to the island owner, the slave device S1 may send a synchronization request to another device having a Wi-Fi link with the slave device S1. For example, the synchronization request may be specifically a sync request action frame. It may be set that there is a Wi-Fi link between a device S3 and the slave device S1, and the slave device S1 sends a synchronization request to the device S3. The device S3 may send a synchronization indication to the slave device S1 in response to the synchronization request. For example, the synchronization indication may be a beacon frame. The slave device S1 may perform clock synchronization based on the synchronization indication, to synchronize a clock to a clock of the master device. For details, refer to the foregoing descriptions of step 602a to step 604a in FIG. 6A and FIG. 6B. Details are not described herein again.

In an illustrative example, the device S3 may send the synchronization indication to the slave device S1 based on a preset period. In an example, the synchronization indication is sent to the slave device S1 in a fixed slot of each period. For example, the device S3 and the slave device S1 may exchange information over the Wi-Fi link.

If the slave device S1 fails to receive the synchronization indication from the device S2 after the slave device S1 sends the synchronization request to the device S3. The slave device S1 may continue to send a synchronization request to another device having a Wi-Fi link with the slave device S1, to request a synchronization indication.

If all devices having Wi-Fi links with the slave device S1 do not send a synchronization indication to the slave device S1, it indicates that the Wi-Fi link of the slave device S1 may be faulty. In this case, regardless of whether the slave device S1 is in the synchronization slot, the slave device S1 may switch from the operating channel to the social channel, to listen to the beacon frame on the social channel again, and join in the clock domain again.

In some embodiments, the island owner may be configured to send a synchronization indication (for example, a beacon frame) to another device in the island based on a preset period, so that the another device may maintain clock synchronization with the master device based on the synchronization indication.

In some embodiments, two devices having a Wi-Fi link may be configured to send a synchronization indication to each other based on a preset period, to assist the peer device in maintaining clock synchronization with the master device.

The foregoing example describes the solution for re-synchronizing the clock to the clock of the master device after the device is out of synchronization.

The following describes a frame in embodiments of this application by using an example.

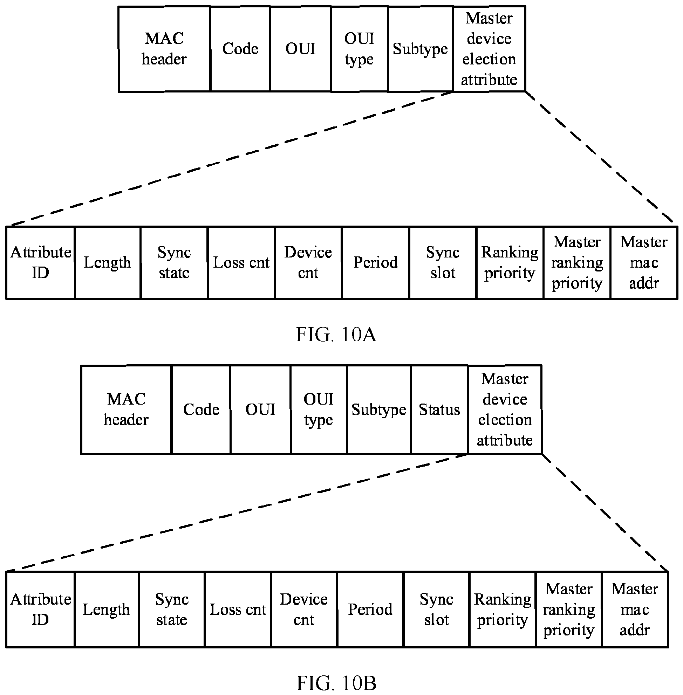

The sync request action frame may have a frame structure shown in FIG. 10A. Fields such as a MAC header (header), code, OUI and an OUI type may be filled according to a filling rule of an action frame defined in the standard 802.11 Vendor. Other fields are described as follows:
(1) Subtype field: This field indicates whether a frame is a request frame or a response frame. The subtype field is filled with 0, indicating the request frame. The subtype field is filled with 1, indicating the response frame.
(2) Master device election attribute (master election attribute) field: Meanings of sub-fields included in the master device election attribute field are as follows:
   (2.1) Sync state field: This field is filled with 0, indicating that a sending device of the frame is in an out-of-synchronization state (non-sync). This field is filled with 1, indicating that the sending device of the frame is a slave device. This field is filled with 2, indicating that the sending device of the frame is a master device.
   (2.2) Device cnt field: This field is filled with a quantity of nodes in a clock domain in which the sending device of the frame is located.
   (2.3) Loss cnt: Content in this field indicates a quantity of beacon frames of the master device lost by the sending device of the frame in which the field is located, and the beacon frame is a beacon frame sent by the master device in a synchronization slot. When there are a plurality of lost beacon frames of the master device, the plurality of beacon frames are a plurality of beacon frames continuously sent by the master device. It may be set that the content filled in the field is K, indicating that the sending device loses beacon frames sent by the master device in K consecutive synchronization slots. K is a positive integer greater than or equal to 1. As described above, the sending device of the frame in which the field is located may encounter single-point out-of-synchronization, and then synchronize to the master device via another device having a Wi-Fi link with the sending device. In this case, the content filled in the field indicates a quantity of beacon frames of the master device lost by an island owner of the sending device. That the slave device loses the beacon frame of the master device means that the slave device fails to receive the beacon frame sent by the master device.
   (2.4) Period: Content in this field indicates a quantity of periods for sending beacons.
   (2.5) Sync slot: Content in this field indicates a specific slot (slot) in which the beacon frame is sent.
   (2.6) Ranking priority field: This field is filled with RP value information of the sending device of the frame. The ranking priority field includes three sub-fields: a device level (Device Level) field, a protocol version (Version) field, and a link count (Link Cnt) field.
   (2.7) Master ranking priority field: This field is filled with an RP value of a master. If the sending device of the frame is the master device, content in this field is consistent with content in the ranking priority field. If the sending device of the frame is the slave device, content in this field is content obtained by parsing the ranking priority field of the beacon frame sent by the master device.
   (2.8) Master mac addr field: This field is filled with a mac address of the master device, and another device may generate corresponding clock domain identification information by using the mac address of the master device.

The foregoing example describes the sync request action frame. Next, the domain merge request frame and the domain merge response frame are described.

The domain merge request frame and the domain merge response frame may have a frame structure shown in FIG. 10B.

As shown in FIG. 10B, frame structures of the domain merge request frame and the domain merge response frame are similar to that of the sync request action frame. Differences are as follows:

Content filled in the action type field is different, to indicate that the domain merge request frame and the sync request action frame are different types of frames, or indicate that the domain merge response frame and the sync request action frame are different types of frames.

Compared with the sync request action frame, the domain merge request frame and the domain merge response frame have an additional status field. For the domain merge response frame, when content filled in the status field indicates whether clock domain merge is accepted. For example, when the status field is filled with 1, it indicates that a sending device of the domain merge response frame rejects clock domain merge. When the status field is filled with 0, it indicates that the sending device of the domain merge response frame accepts clock domain merge.

In addition, the sync request action frame has a wide application scope, and may be used in a clock synchronization solution in a plurality of scenarios or cases. The domain merge request frame and the domain merge response frame have a narrow application scope, and are usually used in a clock synchronization solution in a clock domain merge scenario.

Next, the PNF frame is described by using an example.

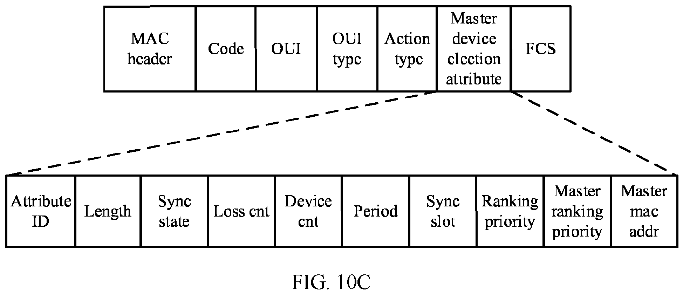

The PNF frame is a private broadcast action frame, and is obtained by extending a vendor action frame in the standard 802.11. A structure of the PNF frame is shown in FIG. 10C. For fields such as a MAC header, code, OUT, an OUT type, and FCS, refer to a definition of the vendor frame in the standard 802.11. An action type is filled with 0. For details of the master device election attribute field, refer to the foregoing descriptions of the embodiment shown in FIG. 10A. Details are not described herein again.

Next, based on the clock synchronization solution described above, an embodiment of this application provides a clock synchronization method for description. It may be understood that the clock synchronization method to be described below is another expression manner of the clock synchronization solution described above, and the two are combined. For a part or all of content in the method, refer to the foregoing descriptions of the clock synchronization solution.

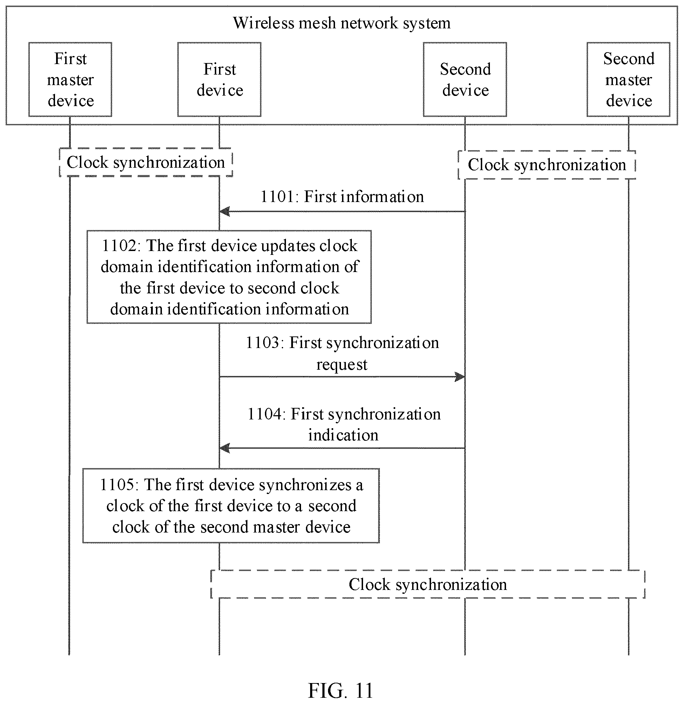

Refer to FIG. 11. The method may be applied to a wireless mesh network system. The wireless mesh network system includes a first device, a second device, a first master device, and a second master device, a clock of the first device and a clock of the first master device are synchronized, and a clock of the second device and a second clock of the second master device are synchronized. As shown in FIG. 11, the method includes the following steps.

Step 1101: The first device receives first information sent by the second device. The first information includes second clock domain identification information, and the second clock domain identification information corresponds to the second clock.

For example, the first information may be a data frame or a management frame sent by the second device, and the second clock domain identification information may be located in a frame header of the data frame or the management frame. For example, the second clock domain identification information is determined based on preset identification information and identification information of the second master device.

The first device may perform step 1102 of updating clock domain identification information of the first device to the second clock domain identification information and perform step 1103 of sending a first synchronization request to the second device when quality of a signal between the first device and the second master device meets a first condition. For implementation of a specific execution process of step 1102, refer to the foregoing descriptions of step 601a in FIG. 6A and FIG. 6B. For implementation of a specific execution process of step 1103, refer to the foregoing descriptions of step 602a in FIG. 6A and FIG. 6B.

For example, the first condition includes: the quality of the signal between the first device and the second master device is greater than quality of a signal between the first device and the first master device, and/or the quality of the signal between the first device and the second master device is greater than a preset quality threshold.

For example, when the quality of the signal between the first device and the second master device meets the first condition, and a ranking priority of the second master device is higher than a ranking priority of the first master device, the first device may perform step 1102 and step 1103.

Step 1104: The first device receives a first synchronization indication from the second device. The first synchronization indication is sent by the second device in response to the first synchronization request, and the first synchronization indication includes the second clock domain identification information and a first moment at which the second device sends the first synchronization indication. For details, refer to the foregoing descriptions of step 603a in FIG. 6A and FIG. 6B.

Step 1105: The first device synchronizes the clock of the first device to the second clock based on the second clock domain identification information and the first moment. For details, refer to the foregoing descriptions of step 604a in FIG. 6A and FIG. 6B.

In some embodiments, the second master device and the second device may be a same device. In some other embodiments, the second master device and the second device may be two devices independent of each other.

In some embodiments, the wireless mesh network system further includes a third device, the third device and the first device are located in a first island, and the third device is an island owner of the first island. The method further includes: The first device sends a first domain merge request to the third device, where the first domain merge request includes information about the second master device, and the information about the second master device includes identification information of the second master device or the second clock domain identification information. The third device updates clock domain identification information of the third device to the second clock domain identification information based on the information about the second master device. The first device sends a second synchronization indication to the third device, where the second synchronization indication includes the second clock domain identification information and a second moment at which the first device sends the second synchronization indication. The third device synchronizes a clock of the third device to the second clock based on the second clock domain identifier and the second moment. For details, refer to the foregoing descriptions of step 601b to step 605b in FIG. 6A and FIG. 6B.

In some embodiments, the first island further includes at least one fourth device, and the method further includes: The third device sends a third synchronization indication to the at least one fourth device, where the third synchronization indication includes a third moment at which the third device sends the third synchronization indication. The at least one fourth device synchronizes a clock of the at least one fourth device to the second clock based on the third moment. For details, refer to the foregoing descriptions of step 601c and step 602c in FIG. 6A and FIG. 6B.

In some embodiments, the method further includes: The third device sends a second domain merge request to the first master device, where the second domain merge request includes the information about the second master device, and the information about the second master device includes the identification information of the second master device or the second clock domain identification information. The first master device updates clock domain identification information of the first master device to the second clock domain identification information based on the information about the second master device. The third device sends a fourth synchronization indication to the first master device, where the fourth synchronization indication includes the second clock domain identification information and a fourth moment at which the third device sends the fourth synchronization indication. The first master device synchronizes the clock of the first master device to the second clock based on the second clock domain identification information and the fourth moment. For details, refer to the foregoing descriptions of steps 601d to 605d in FIG. 6A and FIG. 6B.

In some embodiments, the wireless mesh network system further includes at least one fifth device, a clock of the at least one fifth device and the first clock are synchronized, and the at least one fifth device does not belong to the first island. The method further includes: The first master device sends a fifth synchronization indication to the at least one fifth device, where the fifth synchronization indication includes a fifth moment at which the first master device sends the fifth synchronization indication. The at least one fifth device synchronizes the clock of the at least one fifth device to the second clock based on the fifth moment.

For details, refer to the foregoing descriptions of step 601e and step 602e in FIG. 6A and FIG. 6B.

In some embodiments, the at least one fifth device includes a sixth device and a seventh device, there is a Wi-Fi link between the sixth device and the sixth device, the sixth device is outside signal coverage of the second master device, and the seventh device is within the signal coverage of the second master device. That the at least one fifth device synchronizes the clock of the at least one fifth device to the second clock based on the fifth moment includes: The seventh device synchronizes a clock of the seventh device to the second clock based on the fifth moment. The sixth device sends a sixth synchronization request to the seventh device. The sixth device receives a sixth synchronization indication sent by the seventh device, where the sixth synchronization indication includes a sixth moment at which the sixth device sends the sixth synchronization indication. The sixth device synchronizes a clock of the sixth device to the second clock based on the sixth moment. For details, refer to the foregoing descriptions of the solution for performing clock synchronization on the device with single-point out-of-synchronization.

In some embodiments, the wireless mesh network system further includes at least one eighth device, the at least one eighth device and the first device are located in a second island, and the first device is an island owner of the second island. The method further includes: The first device sends a seventh synchronization indication to the at least one eighth device, where the seventh synchronization indication includes a seventh moment at which the first device sends the seventh synchronization indication. The at least one eighth device synchronizes a clock of the at least one eighth device to the second clock based on the seventh moment. For details, refer to the foregoing descriptions of step 801b, step 802b-1, and step 802b-2 in FIG. 8A and FIG. 8B.

In some embodiments, the method further includes: The first device sends a third domain merge request to the first master device, where the third domain merge request includes information about the second master device, and the information about the second master device includes identification information of the second master device or the second clock domain identification information. The first master device updates clock domain identification information of the first master device to the second clock domain identification information based on the information about the second master device. The first device sends an eighth synchronization indication to the first master device, where the eighth synchronization indication includes the second clock domain identification information and an eighth moment at which the first device sends the eighth synchronization indication. The first master device synchronizes the clock of the first master device to the second clock based on the second clock domain identification information and the eighth moment. For details, refer to the foregoing descriptions of step 801c to step 805c in FIG. 8A and FIG. 8B.

In some embodiments, the wireless mesh network system further includes at least one ninth device, and the at least one ninth device does not belong to the second island. The method further includes: The first master device sends a ninth synchronization indication to the at least one ninth device, where the ninth synchronization indication includes a ninth moment at which the first master device sends the ninth synchronization indication. The at least one ninth device synchronizes a clock of the at least one ninth device to the second clock based on the ninth moment. For details, refer to the foregoing descriptions of step 801d and step 802d in FIG. 8A and FIG. 8B.

In some embodiments, the first device and the first master device are a same device, and the wireless mesh network system further includes at least one tenth device. The method further includes: The first device sends a tenth synchronization indication to the at least one tenth device, where the tenth synchronization indication includes a tenth moment at which the first device sends the tenth synchronization indication. The at least one tenth device synchronizes a clock of the at least one tenth device to the second clock based on the tenth moment. For details, refer to the foregoing descriptions of step 901b, step 902d-1, step 902d-2, and step 902d-3 in FIG. 9.

According to the clock synchronization method provided in this embodiment of this application, devices in different clock domains may be merged into a same clock domain, so that these devices can accept unified scheduling, to optimize channel resource scheduling, reduce mutual interference between devices, and improve communication experience of a user.

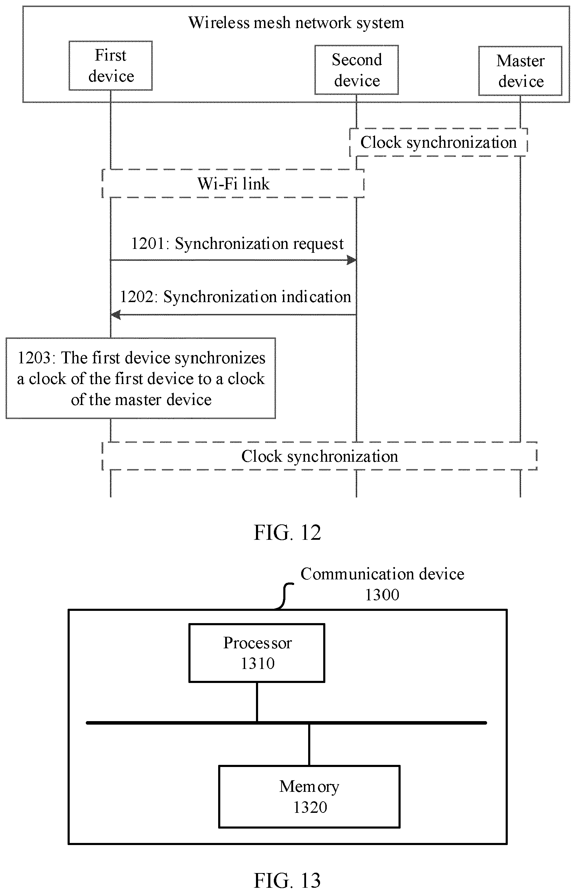

Refer to FIG. 12. An embodiment of this application further provides a clock synchronization method, which may be applied to a wireless mesh network system. The wireless mesh network system may include a first device, a second device, and a master device, a clock of the second device and a clock of the master device are synchronized, and there is a Wi-Fi link between the second device and the first device. As shown in FIG. 12, the method includes the following steps.

The first device may perform step 1201 of sending a synchronization request to the second device when the first device is outside signal coverage of the master device.

The second device may perform step 1202 of sending a synchronization indication to the first device in response to the synchronization request, where the synchronization indication includes a moment at which the second device sends the synchronization indication.

When receiving the synchronization indication, the first device may perform step 1203 of synchronizing a clock of the first device to the clock of the master device based on the moment at which the second device sends the synchronization indication.

In some embodiments, that the second device sends a synchronization indication to the first device includes: The second device sends the synchronization indication to the first device based on a preset period.

For details of the clock synchronization method shown in FIG. 12, refer to the foregoing descriptions of the clock synchronization solution for the device with single-point out-of-synchronization.

In the clock synchronization method provided in this embodiment of this application, when the first device is outside the signal coverage of the master device, the first device may synchronize the clock to the clock of the master device via the second device having the Wi-Fi link with the first device, so that the first device can accept scheduling of the master device, to improve communication experience of a user.

An embodiment of this application provides a wireless mesh network system, including a first device, a second device, a first master device, and a second master device, where a clock of the first device and a clock of the first master device are synchronized, and a clock of the second device and a second clock of the second master device are synchronized. The first device is configured to receive first information sent by the second device, where the first information includes second clock domain identification information, and the second clock domain identification information corresponds to the second clock. The first device is further configured to update clock domain identification information of the first device to the second clock domain identification information and send a first synchronization request to the second device when quality of a signal between the first device and the second master device meets a first condition. The first device is further configured to receive a first synchronization indication from the second device, where the first synchronization indication is sent by the second device in response to the first synchronization request, and the first synchronization indication includes the second clock domain identification information and a first moment at which the second device sends the first synchronization indication. The first device is further configured to synchronize the clock of the first device to the second clock based on the second clock domain identification information and the first moment. The second master device and the second device may be a same device, or may be two devices independent of each other.

For implementation of functions of the devices in the wireless mesh network system, refer to the foregoing method embodiment shown in FIG. 11. Details are not described herein again.

An embodiment of this application further provides a wireless mesh network system, where the wireless mesh network system includes a first device, a second device, and a master device, a clock of the second device and a clock of the master device are synchronized, and there is a Wi-Fi link between the second device and the first device. The first device is configured to send a synchronization request to the second device when the first device is outside signal coverage of the master device. The second device is configured to send a synchronization indication to the first device, where the synchronization indication includes a moment at which the second device sends the synchronization indication. The first device is further configured to synchronize a clock of the first device to the clock of the master device based on the moment at which the second device sends the synchronization indication.

For implementation of functions of the devices in the wireless mesh network system, refer to the foregoing descriptions of the clock synchronization solution for the device with single-point out-of-synchronization. Details are not described herein.

Refer to FIG. 13. An embodiment of this application further provides a communication device 1300. The communication device 1300 includes a processor 1310 and a memory 1320. The memory 1320 is configured to store computer instructions. The processor 1310 is configured to execute the computer instructions stored in the memory 1320, so that the communication device 1300 can perform the operations of the device A1 in the embodiment shown in FIG. 6A and FIG. 6B, FIG. 8A and FIG. 8B, or FIG. 9, or perform the operations of the first device in the embodiment shown in FIG. 11. For example, the communication device 1300 may
receive first information sent by a second device, where the first information includes second clock domain identification information, and the second clock domain identification information corresponds to a second clock;
update clock domain identification information of the communication device to the second clock domain identification information and send a first synchronization request to the second device when quality of a signal between the communication device and a second master device meets a first condition;
receive a first synchronization indication from the second device, where the first synchronization indication is sent by the second device in response to the first synchronization request, and the first synchronization indication includes the second clock domain identification information and a first moment at which the second device sends the first synchronization indication; and
synchronize a clock of the communication device to the second clock based on the second clock domain identification information and the first moment, where the second master device and the second device may be a same device, or may be two devices independent of each other.

It may be understood that, the processor in embodiments of this application may be a central processing unit (central processing unit, CPU), the processor may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any regular processor, or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium in any other form well known in the art. For example, a storage medium is coupled to a processor, so that the processor can read information from the storage medium and write information into the storage medium. Certainly, the storage medium may alternatively be a component of the processor. The processor and the storage medium may be disposed in an ASIC.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It may be understood that various numbers in embodiments of this application are merely used for differentiation for ease of description, and are not used to limit the scope of embodiments of this application.

## Claims

1. A clock synchronization method, applied to a wireless mesh network system, wherein the wireless mesh network system comprises a first device, a second device, a first master device, and a second master device, a clock of the first device and a clock of the first master device are synchronized, and a clock of the second device and a second clock of the second master device are synchronized; and the method comprises:
receiving, by the first device, first information sent by the second device, wherein the first information comprises second clock domain identification information, and the second clock domain identification information corresponds to the second clock;
updating, by the first device, clock domain identification information of the first device to the second clock domain identification information and sending a first synchronization request to the second device when quality of a signal between the first device and the second master device meets a first condition;
receiving, by the first device, a first synchronization indication from the second device, wherein the first synchronization indication is sent by the second device in response to the first synchronization request, and the first synchronization indication comprises the second clock domain identification information and a first moment at which the second device sends the first synchronization indication; and
synchronizing, by the first device, the clock of the first device to the second clock based on the second clock domain identification information and the first moment.

2. The method according to claim 1, wherein the first condition comprises: the quality of the signal between the first device and the second master device is greater than quality of a signal between the first device and the first master device, and/or the quality of the signal between the first device and the second master device is greater than a preset quality threshold.

3. The method according to claim 1 or 2, wherein the updating, by the first device, clock domain identification information of the first device to the second clock domain identification information and sending a first synchronization request to the second device when quality of a signal between the first device and the second master device meets a first condition comprises:
updating, by the first device, the clock domain identification information of the first device to the second clock domain identification information and sending the first synchronization request to the second device when the quality of the signal between the first device and the second master device meets the first condition and a ranking priority of the second master device is higher than a ranking priority of the first master device.

4. The method according to any one of claims 1 to 3, wherein the wireless mesh network system further comprises a third device, the third device and the first device are located in a first island, and the third device is an island owner of the first island; and
the method further comprises:
sending, by the first device, a first domain merge request to the third device, wherein the first domain merge request comprises information about the second master device, and the information about the second master device comprises identification information of the second master device or the second clock domain identification information;
updating, by the third device, clock domain identification information of the third device to the second clock domain identification information based on the information about the second master device;
sending, by the first device, a second synchronization indication to the third device, wherein the second synchronization indication comprises the second clock domain identification information and a second moment at which the first device sends the second synchronization indication; and
synchronizing, by the third device, a clock of the third device to the second clock based on the second clock domain identifier information and the second moment.

5. The method according to claim 4, wherein the first island further comprises at least one fourth device, and the method further comprises:
sending, by the third device, a third synchronization indication to the at least one fourth device, wherein the third synchronization indication comprises a third moment at which the third device sends the third synchronization indication; and
synchronizing, by the at least one fourth device, a clock of the at least one fourth device to the second clock based on the third moment.

6. The method according to claim 4 or 5, wherein the method further comprises:
sending, by the third device, a second domain merge request to the first master device, wherein the second domain merge request comprises the information about the second master device, and the information about the second master device comprises the identification information of the second master device or the second clock domain identification information;
updating, by the first master device, clock domain identification information of the first master device to the second clock domain identification information based on the information about the second master device;
sending, by the third device, a fourth synchronization indication to the first master device, wherein the fourth synchronization indication comprises the second clock domain identification information and a fourth moment at which the third device sends the fourth synchronization indication; and
synchronizing, by the first master device, the clock of the first master device to the second clock based on the second clock domain identification information and the fourth moment.

7. The method according to claim 6, wherein the wireless mesh network system further comprises at least one fifth device, a clock of the at least one fifth device and clock of the first master device are synchronized, and the at least one fifth device does not belong to the first island; and
the method further comprises:
sending, by the first master device, a fifth synchronization indication to the at least one fifth device, wherein the fifth synchronization indication comprises a fifth moment at which the first master device sends the fifth synchronization indication; and
synchronizing, by the at least one fifth device, the clock of the at least one fifth device to the second clock based on the fifth moment.

8. The method according to claim 7, wherein the at least one fifth device comprises a sixth device and a seventh device, there is a Wi-Fi link between the sixth device and the seventh device, the sixth device is outside signal coverage of the second master device, and the seventh device is within the signal coverage of the second master device; and
the synchronizing, by the at least one fifth device, the clock of the at least one fifth device to the second clock based on the fifth moment comprises:
synchronizing, by the seventh device, a clock of the seventh device to the second clock based on the fifth moment;
sending, by the sixth device, a sixth synchronization request to the seventh device;
receiving, by the sixth device, a sixth synchronization indication sent by the seventh device, wherein the sixth synchronization indication comprises a sixth moment at which the sixth device sends the sixth synchronization indication; and
synchronizing, by the sixth device, a clock of the sixth device to the second clock based on the sixth moment.

9. The method according to any one of claims 1 to 3, wherein the wireless mesh network system further comprises at least one eighth device, the at least one eighth device and the first device are located in a second island, and the first device is an island owner of the second island; and
the method further comprises:
sending, by the first device, a seventh synchronization indication to the at least one eighth device, wherein the seventh synchronization indication comprises a seventh moment at which the first device sends the seventh synchronization indication; and
synchronizing, by the at least one eighth device, a clock of the at least one eighth device to the second clock based on the seventh moment.

10. The method according to claim 9, wherein the method further comprises:
sending, by the first device, a third domain merge request to the first master device, wherein the third domain merge request comprises information about the second master device, and the information about the second master device comprises identification information of the second master device or the second clock domain identification information;
updating, by the first master device, clock domain identification information of the first master device to the second clock domain identification information based on the information about the second master device;
sending, by the first device, an eighth synchronization indication to the first master device, wherein the eighth synchronization indication comprises the second clock domain identification information and an eighth moment at which the first device sends the eighth synchronization indication; and
synchronizing, by the first master device, the clock of the first master device to the second clock based on the second clock domain identification information and the eighth moment.

11. The method according to claim 10, wherein the wireless mesh network system further comprises at least one ninth device, and the at least one ninth device does not belong to the second island; and
the method further comprises:
sending, by the first master device, a ninth synchronization indication to the at least one ninth device, wherein the ninth synchronization indication comprises a ninth moment at which the first master device sends the ninth synchronization indication; and
synchronizing, by the at least one ninth device, a clock of the at least one ninth device to the second clock based on the ninth moment.

12. The method according to any one of claims 1 to 3, wherein the first device and the first master device are a same device, and the wireless mesh network system further comprises at least one tenth device; and
the method further comprises:
sending, by the first device, a tenth synchronization indication to the at least one tenth device, wherein the tenth synchronization indication comprises a tenth moment at which the first device sends the tenth synchronization indication; and
synchronizing, by the at least one tenth device, a clock of the at least one tenth device to the second clock based on the tenth moment.

13. The method according to any one of claims 1 to 12, wherein the first information is a data frame or a management frame, and the second clock domain identification information is located in a frame header of the data frame or the management frame; and/or
the second clock domain identification information is determined based on preset identification information and the identification information of the second master device.

14. A clock synchronization method, applied to a first device in a wireless mesh network system, wherein the wireless mesh network system further comprises a second device, a first master device, and a second master device, a clock of the first device and a clock of the first master device are synchronized, and a clock of the second device and a second clock of the second master device are synchronized; and the method comprises:
receiving, by the first device, first information sent by the second device, wherein the first information comprises second clock domain identification information, and the second clock domain identification information corresponds to the second clock;
updating, by the first device, clock domain identification information of the first device to the second clock domain identification information and sending a first synchronization request to the second device when quality of a signal between the first device and the second master device meets a first condition;
receiving, by the first device, a first synchronization indication from the second device, wherein the first synchronization indication is sent by the second device in response to the first synchronization request, and the first synchronization indication comprises the second clock domain identification information and a first moment at which the second device sends the first synchronization indication; and
synchronizing, by the first device, the clock of the first device to the second clock based on the second clock domain identification information and the first moment.

15. The method according to claim 14, wherein the first condition comprises: the quality of the signal between the first device and the second master device is greater than quality of a signal between the first device and the first master device, and/or the quality of the signal between the first device and the second master device is greater than a preset quality threshold.

16. The method according to claim 14 or 15, wherein the updating, by the first device, clock domain identification information of the first device to the second clock domain identification information and sending a first synchronization request to the second device when quality of a signal between the first device and the second master device meets a first condition comprises:
updating, by the first device, the clock domain identification information of the first device to the second clock domain identification information and sending the first synchronization request to the second device when the quality of the signal between the first device and the second master device meets the first condition and a ranking priority of the second master device is higher than a ranking priority of the first master device.

17. The method according to claim 14 or 15, wherein the wireless mesh network system further comprises a third device, the third device and the first device are located in a first island, and the third device is an island owner of the first island; and
the method further comprises:
sending, by the first device, a first domain merge request to the third device, wherein the first domain merge request comprises information about the second master device, the information about the second master device comprises identification information of the second master device or the second clock domain identification information, and the information about the second master device is used by the third device to update clock domain identification information of the third device to the second clock domain identification information; and
sending, by the first device, a second synchronization indication to the third device, wherein the second synchronization indication comprises the second clock domain identification information and a second moment at which the first device sends the second synchronization indication, and the second clock domain identification information and the second moment are used by the third device to synchronize a clock of the third device to the second clock.

18. The method according to claim 14 or 15, wherein the wireless mesh network system further comprises at least one eighth device, the at least one eighth device and the first device are located in a second island, and the first device is an island owner of the second island; and
the method further comprises: sending, by the first device, a seventh synchronization indication to the at least one eighth device, wherein the seventh synchronization indication comprises a seventh moment at which the first device sends the seventh synchronization indication, and the seventh moment is used by the at least one eighth device to synchronize a clock of the at least one eighth device to the second clock.

19. The method according to claim 18, wherein the method further comprises:
sending, by the first device, a third domain merge request to the first master device, wherein the third domain merge request comprises information about the second master device, the information about the second master device comprises identification information of the second master device or the second clock domain identification information, and the information about the second master device is used by the first master device to update clock domain identification information of the first master device to the second clock domain identification information; and
sending, by the first device, an eighth synchronization indication to the first master device, wherein the eighth synchronization indication comprises the second clock domain identification information and an eighth moment at which the first device sends the eighth synchronization indication, and the second clock domain identification information and the eighth moment are used by the first master device to synchronize the clock of the first master device to the second clock.

20. The method according to claim 14 or 15, wherein the first device and the first master device are a same device, and the wireless mesh network system further comprises at least one tenth device; and
the method further comprises:
sending, by the first device, a tenth synchronization indication to the at least one tenth device, wherein the tenth synchronization indication comprises a tenth moment at which the first device sends the tenth synchronization indication, and the tenth moment is used by the at least one tenth device to synchronize a clock of the at least one tenth device to the second clock.

21. A clock synchronization method, applied to a wireless mesh network system, wherein the wireless mesh network system comprises a first device, a second device, and a master device, a clock of the second device and a clock of the master device are synchronized, and there is a Wi-Fi link between the second device and the first device; and the method comprises:
sending, by the first device, a synchronization request to the second device when the first device is outside signal coverage of the master device;
sending, by the second device, a synchronization indication to the first device, wherein the synchronization indication comprises a moment at which the second device sends the synchronization indication; and
synchronizing, by the first device, a clock of the first device to the clock of the master device based on the moment at which the second device sends the synchronization indication.

22. The method according to claim 21, wherein the sending, by the second device, a synchronization indication to the first device comprises: sending, by the second device, the synchronization indication to the first device based on a preset period.

23. A wireless mesh network system, comprising a first device, a second device, a first master device, and a second master device, wherein a clock of the first device and a clock of the first master device are synchronized, and a clock of the second device and a second clock of the second master device are synchronized;
the first device is configured to receive first information sent by the second device, wherein the first information comprises second clock domain identification information, and the second clock domain identification information corresponds to the second clock;
the first device is further configured to update clock domain identification information of the first device to the second clock domain identification information and send a first synchronization request to the second device when quality of a signal between the first device and the second master device meets a first condition;
the first device is further configured to receive a first synchronization indication from the second device, wherein the first synchronization indication is sent by the second device in response to the first synchronization request, and the first synchronization indication comprises the second clock domain identification information and a first moment at which the second device sends the first synchronization indication; and
the first device is further configured to synchronize the clock of the first device to the second clock based on the second clock domain identification information and the first moment.

24. The system according to claim 23, wherein the first condition comprises: the quality of the signal between the first device and the second master device is greater than quality of a signal between the first device and the first master device, and/or the quality of the signal between the first device and the second master device is greater than a preset quality threshold.

25. The system according to claim 23 or 24, wherein the first device is configured to update the clock domain identification information of the first device to the second clock domain identification information and send the first synchronization request to the second device when the quality of the signal between the first device and the second master device meets the first condition and a ranking priority of the second master device is higher than a ranking priority of the first master device.

26. The system according to claim 23 or 24, wherein the wireless mesh network system further comprises a third device, the third device and the first device are located in a first island, and the third device is an island owner of the first island;
the first device is further configured to send a first domain merge request to the third device, wherein the first domain merge request comprises information about the second master device, and the information about the second master device comprises identification information of the second master device or the second clock domain identification information;
the third device is configured to update clock domain identification information of the third device to the second clock domain identification information based on the information about the second master device;
the first device is further configured to send a second synchronization indication to the third device, wherein the second synchronization indication comprises the second clock domain identification information and a second moment at which the first device sends the second synchronization indication; and
the third device is further configured to synchronize a clock of the third device to the second clock based on the second clock domain identifier and the second moment.

27. The system according to claim 26, wherein the first island further comprises at least one fourth device;
the third device is further configured to send a third synchronization indication to the at least one fourth device, wherein the third synchronization indication comprises a third moment at which the third device sends the third synchronization indication; and
the at least one fourth device is configured to synchronize a clock of the at least one fourth device to the second clock based on the third moment.

28. The system according to claim 26 or 27, wherein
the third device is further configured to send a second domain merge request to the first master device, wherein the second domain merge request comprises the information about the second master device, and the information about the second master device comprises the identification information of the second master device or the second clock domain identification information;
the first master device is configured to update clock domain identification information of the first master device to the second clock domain identification information based on the information about the second master device;
the third device is further configured to send a fourth synchronization indication to the first master device, wherein the fourth synchronization indication comprises the second clock domain identification information and a fourth moment at which the third device sends the fourth synchronization indication; and
the first master device is configured to synchronize the clock of the first master device to the second clock based on the second clock domain identification information and the fourth moment.

29. The system according to claim 28, wherein the wireless mesh network system further comprises at least one fifth device, a clock of the at least one fifth device and the first clock are synchronized, and the at least one fifth device does not belong to the first island;
the first master device is further configured to send a fifth synchronization indication to the at least one fifth device, wherein the fifth synchronization indication comprises a fifth moment at which the first master device sends the fifth synchronization indication; and
the at least one fifth device is configured to synchronize the clock of the at least one fifth device to the second clock based on the fifth moment.

30. The system according to claim 29, wherein the at least one fifth device comprises a sixth device and a seventh device, there is a Wi-Fi link between the sixth device and the sixth device, the sixth device is outside signal coverage of the second master device, and the seventh device is within the signal coverage of the second master device;
the seventh device is configured to synchronize a clock of the seventh device to the second clock based on the fifth moment;
the sixth device is configured to send a sixth synchronization request to the seventh device;
the sixth device is configured to receive a sixth synchronization indication sent by the seventh device, wherein the sixth synchronization indication comprises a sixth moment at which the sixth device sends the sixth synchronization indication; and
the sixth device is configured to synchronize a clock of the sixth device to the second clock based on the sixth moment.

31. The system according to any one of claims 23 to 25, wherein the wireless mesh network system further comprises at least one eighth device, the at least one eighth device and the first device are located in a second island, and the first device is an island owner of the second island;
the first device is further configured to send a seventh synchronization indication to the at least one eighth device, wherein the seventh synchronization indication comprises a seventh moment at which the first device sends the seventh synchronization indication; and
the at least one eighth device is configured to synchronize a clock of the at least one eighth device to the second clock based on the seventh moment.

32. The system according to claim 31, wherein
the first device is further configured to send a third domain merge request to the first master device, wherein the third domain merge request comprises information about the second master device, and the information about the second master device comprises identification information of the second master device or the second clock domain identification information;
the first master device is configured to update clock domain identification information of the first master device to the second clock domain identification information based on the information about the second master device;
the first device is further configured to send an eighth synchronization indication to the first master device, wherein the eighth synchronization indication comprises the second clock domain identification information and an eighth moment at which the first device sends the eighth synchronization indication; and
the first master device is further configured to synchronize the clock of the first master device to the second clock based on the second clock domain identification information and the eighth moment.

33. The system according to claim 32, wherein the wireless mesh network system further comprises at least one ninth device, and the at least one ninth device does not belong to the second island;
the first master device is further configured to send a ninth synchronization indication to the at least one ninth device, wherein the ninth synchronization indication comprises a ninth moment at which the first master device sends the ninth synchronization indication; and
the at least one ninth device is configured to synchronize a clock of the at least one ninth device to the second clock based on the ninth moment.

34. The system according to any one of claims 23 to 25, wherein the first device and the first master device are a same device, and the wireless mesh network system further comprises at least one tenth device;
the first device is further configured to send a tenth synchronization indication to the at least one tenth device, wherein the tenth synchronization indication comprises a tenth moment at which the first device sends the tenth synchronization indication; and
the at least one tenth device is configured to synchronize a clock of the at least one tenth device to the second clock based on the tenth moment.

35. The system according to any one of claims 23 to 34, wherein the first information is a data frame or a management frame, and the second clock domain identification information is located in a frame header of the data frame or the management frame; and/or
the second clock domain identification information is determined based on preset identification information and the identification information of the second master device.

36. A communication device, wherein a wireless mesh network system in which the communication device is located further comprises a second device, a first master device, and a second master device, a clock of the communication device and a clock of the first master device are synchronized, and a clock of the second device and a second clock of the second master device are synchronized; and
the communication device comprises a processor and a memory, and the processor is configured to execute instructions stored in the memory, so that the communication device
receives first information sent by the second device, wherein the first information comprises second clock domain identification information, and the second clock domain identification information corresponds to the second clock;
updates clock domain identification information of the communication device to the second clock domain identification information and sends a first synchronization request to the second device when quality of a signal between the communication device and the second master device meets a first condition;
receives a first synchronization indication from the second device, wherein the first synchronization indication is sent by the second device in response to the first synchronization request, and the first synchronization indication comprises the second clock domain identification information and a first moment at which the second device sends the first synchronization indication; and
synchronizes the clock of the communication device to the second clock based on the second clock domain identification information and the first moment.

37. The communication device according to claim 36, wherein the first condition comprises: the quality of the signal between the communication device and the second master device is greater than quality of a signal between the communication device and the first master device, and/or the quality of the signal between the communication device and the second master device is greater than a preset quality threshold.

38. The communication device according to claim 36 or 37, wherein when the quality of the signal between the communication device and the second master device meets the first condition and a ranking priority of the second master device is higher than a ranking priority of the first master device, the processor is configured to execute the instructions stored in the memory, so that the communication device further updates the clock domain identification information of the communication device to the second clock domain identification information and sends the first synchronization request to the second device.

39. The communication device according to any one of claims 36 to 38, wherein the wireless mesh network system further comprises a third device, the third device and the communication device are located in a first island, and the third device is an island owner of the first island; and
the processor is configured to execute the instructions stored in the memory, so that the communication device is further
configured to send a first domain merge request to the third device, wherein the first domain merge request comprises information about the second master device, the information about the second master device comprises identification information of the second master device or the second clock domain identification information, and the information about the second master device is used by the third device to update clock domain identification information of the third device to the second clock domain identification information; and
configured to send a second synchronization indication to the third device, wherein the second synchronization indication comprises the second clock domain identification information and a second moment at which the communication device sends the second synchronization indication, and the second clock domain identification information and the second moment are used by the third device to synchronize a clock of the third device to the second clock.

40. The communication device according to any one of claims 36 to 38, wherein the wireless mesh network system further comprises at least one eighth device, the at least one eighth device and the communication device are further located in a second island, and the communication device is an island owner of the second island; and
the processor is configured to execute the instructions stored in the memory, so that the communication device further sends a seventh synchronization indication to the at least one eighth device, wherein the seventh synchronization indication comprises a seventh moment at which the communication device sends the seventh synchronization indication, and the seventh moment is used by the at least one eighth device to synchronize a clock of the at least one eighth device to the second clock.

41. The communication device according to claim 40, wherein the processor is configured to execute the instructions stored in the memory, so that the communication device further
sends a third domain merge request to the first master device, wherein the third domain merge request comprises information about the second master device, the information about the second master device comprises identification information of the second master device or the second clock domain identification information, and the information about the second master device is used by the first master device to update clock domain identification information of the first master device to the second clock domain identification information; and
sends an eighth synchronization indication to the first master device, wherein the eighth synchronization indication comprises the second clock domain identification information and an eighth moment at which the communication device sends the eighth synchronization indication, and the second clock domain identification information and the eighth moment are used by the first master device to synchronize the clock of the first master device to the second clock.

42. The communication device according to any one of claims 36 to 38, wherein the communication device and the first master device are a same device, and the wireless mesh network system further comprises at least one tenth device; and
the processor is configured to execute the instructions stored in the memory, so that the communication device further sends a tenth synchronization indication to the at least one tenth device, wherein the tenth synchronization indication comprises a tenth moment at which the communication device sends the tenth synchronization indication, and the tenth moment is used by the at least one tenth device to synchronize a clock of the at least one tenth device to the second clock.

43. A wireless mesh network system, wherein the wireless mesh network system comprises a first device, a second device, and a master device, a clock of the second device and a clock of the master device are synchronized, and there is a Wi-Fi link between the second device and the first device;
the first device is configured to send a synchronization request to the second device when the first device is outside signal coverage of the master device;
the second device is configured to send a synchronization indication to the first device, wherein the synchronization indication comprises a moment at which the second device sends the synchronization indication; and
the first device is further configured to synchronize a clock of the first device to the clock of the master device based on the moment at which the second device sends the synchronization indication.

44. The system according to claim 43, wherein the second device is configured to send the synchronization indication to the first device based on a preset period.

45. A computer-readable storage medium, comprising computer program instructions, wherein when the computer program instructions are executed by a computing device, the computing device performs the method according to any one of claims 1 to 13, or 14 to 20, or 21 and 22.

46. A computer program product comprising instructions, wherein when the instructions are run by a computing device, the computing device is enabled to perform the method according to any one of claims 1 to 13, or 14 to 20, or 21 and 22.
